# EUROPÄISCHE PATENTSCHRIFT

(11) **EP 3 715 198 B1**
(45) Veröffentlichungstag und Bekanntmachung des Hinweises auf die Patenterteilung: **22.02.2023**
(21) Anmeldenummer: 20165891.1
(22) Anmeldetag: 26.03.2020
(51) Int. Cl.: B60T 8/17, B60T 8/1755, B60T 8/24, B60T 7/20, B60D 1/30

(54) **STEUERTECHNIK FÜR ANHÄNGER-SCHLINGERBREMSEINRICHTUNG**
CONTROL TECHNOLOGY FOR TRAILER LOOP BRAKE DEVICE
TECHNIQUE DE COMMANDE POUR UN DISPOSITIF DE FREIN DE LACET POUR REMORQUES

(30) Priorität: 26.03.2019 DE 202019101716 U
(43) Veröffentlichungstag der Anmeldung: 30.09.2020
(73) Patentinhaber: Alois Kober GmbH, 89359 Kötz (DE)
(72) Erfinder: Zacharias, Georg, 86153 Augsburg (DE); Hartleff, Christian, 89312 Günzburg (DE); Czeschner, Daniel Andre, 86498 Kettershausen (DE); Schaule, Jakob, 86470 Thannhausen (DE); Propp, Florian, 89312 Günzburg (DE); Hofhansl, Walter, 86489 Unterbleichen (DE)
(74) Vertreter: ERNICKE Patent- und Rechtsanwälte PartmbB

(56) Entgegenhaltungen:
- DE-A1-102004 033 474
- DE-A1-102006 055 365
- US-A- 6 042 196

## Beschreibung

Die vorliegende Erfindung betrifft eine Technik zur Steuerung der Betätigungskraft einer Schlingerbremseinrichtung für einen Fahrzeuganhänger.

Aus DE 102006055365 A1 ist ein Verfahren zur Verringerung von Schlingerbewegungen von Fahrzeuganhängern bekannt bei dem das Zuspannen der Bremsen auf beiden Seiten des Fahrzeuganhängers im Takt einer Anhängerschwingung pulsierend erfolgt. Der Bremsdruck wechselt dabei zyklisch zwischen einem ersten Wert und einem zweiten Wert. Der erste Wert beschreibt einen reduzierten Bremsdruck, der dem Bremsenanlagedruck ohne Bremswirkung entspricht. Der zweite Wert betrifft einen errechneten maximalen Bremsdruck, der als statischer Soll-Wert vorgesehen ist.

DE 202005020065 U1 offenbart einen Fahrzeuganhänger, der eine mechanische Auflaufbremse und zusätzlich Radnabenmotoren aufweist, die im Generatorbetrieb eine Bremswirkung erzeugen können. Die Radnabenmotoren/- generatoren werden in Abhängigkeit der Signale eines Schlingersensors von einer Steuerung derart angesteuert, dass auf die Fahrzeugräder Bremskräfte ausgeübt werden, die den Schlingerbewegungen des Anhängers entgegenwirken, wobei auch ein gegenphasiges Abbremsen einzelner Räder möglich ist.

DE 202004008160 U1 betrifft eine Schlingerbremse für Fahrzeuganhänger, die nachträglich anordenbar ist und in Überlagerung zu einer Auflaufbremse des Anhängers wirkt. Ein Stellelement, das über einen Stellantrieb bewegt wird, steuert die Bremswirkung in Reaktion auf das Schlingerverhalten.

DE 102017115445 A1 offenbart ein Anhängerstabilisierungssystem zur Reduzierung von Schlingerbewegungen. Es ist dazu ausgebildet, vor der Betätigung der Radbremsen durch Eingriffsschwellenwerte zu berechnen, um bei geringen Geschwindigkeiten größere Schlingerbewegungen zuzulassen, als bei höheren Geschwindigkeiten. Zusätzlich kann eine Achslastmesseinrichtung vorgesehen sein, um die Bremskraft in Abhängigkeit der gemessenen Achslast und der gemessenen Geschwindigkeit zu steuern, indem ebenfalls Eingriffsschwellenwerte für die Betätigung der Radbremsen berechnet werden.

Aus DE 10047889 A1, DE 69019320 T2 und WO2004/041614 A1 gehen weitere Brems-Techniken hervor, die ein Gespann aus Zugfahrzeug und Anhänger oder das Zugfahrzeug für sich allein betreffen. DE 690 19 320 T2 schlägt für die Betätigung der Zugfahrzeugbremsen vor, bei Erkennung einer Räderblockierung, die in Schlingern auslöst, die Bremsen für eine kurze Dauer zu lösen und anschließend in einem rampenförmigen Verlauf mit einem reduzierten Steigerungsgradienten bis zu einem bestimmten limitierten Bremsdruck wieder zu schließen. Der limitierte Bremsdruck bleibt dann für einen längeren Zeitraum aufrechterhalten.

Aus US 6 042 196 A ist ein Bremssystem für eine Zugfahrzeug-Anhänger-Kombination bekannt, bei der am Schwenkpunkt der Kupplung zwischen Zugfahrzeug und Anhänger ein Kupplungswinkel zwischen der Längsachse des Zugfahrzeugs und der Längsachse des Anhängers erfasst wird. Basierend auf einem Absolutwert dieses Kupplungswinkels oder einer Änderung des Kupplungswinkels und etwaig basierend auf einem Lenkwinkel des Zugfahrzeugs werden statische Soll-Bremskräfte bestimmt. Während einer vorgegebenen Dauer eines Bremseingriffs werden separate Bremsaktuatoren am Anhänger mit der statisch bestimmten Soll-Bremskraft beaufschlagt. Dann wird der Bremseingriff unterbrochen und etwaig für eine weitere vorgegebene Dauer bei einer nochmals bestimmten statischen Soll-Bremskraft betätigt.

DE 20 2004 033 474 A1 offenbart ein Verfahren zur Unterstützung des Fahrers eines KFZ bei ein schlingerndem Anhänger. Wenn über einen Sensor am Zugfahrzeug eine Schlingerbewegung des Anhängers erfasst wird, wird dem Fahrer eine akustische oder optische Warnung mit einer Aufforderung zur Einleitung einer Bremsung angezeigt. Der vom Fahrer über das Bremspedal eingestellte Fahrervordruck wird durch ein Steuergerät erhöht oder vermindert, um einen optimalen oder besseren Rad-Bremsdruck vorzugeben, der zur Bremsung der Räder des Zugfahrzeugs angelegt wird.

Die bisher bekannten Schlingerbremseinrichtungen für Anhänger sind nicht optimal ausgebildet. Sie weisen eine statisch vorgegebene Soll-Betätigungskraft auf, um die Radbremsen des Anhängers für eine Stabilisierungsbremsung zu betätigen. Gegebenenfalls kann ein statischer Maximalwert für die Soll-Betätigungskraft in einem pulsierenden Bremseingriff wiederholt vorgegeben werden. Oder sie weisen eine Einrichtung zur Ermittlung der momentanen Masse des Anhängers auf, um die Soll-Betätigungskraft jeweils vor einer Stabilisierungsbremsung an einen momentanen Beladungszustand des Anhängers anzupassen.

Es ist Aufgabe der vorliegenden Erfindung, eine verbesserte Steuerungstechnik für eine Anhänger-Schlingerbremseinrichtung aufzuzeigen. Die Erfindung löst diese Aufgabe durch die kennzeichnenden Merkmale der eigenständigen Ansprüche 1 und 10.

Die vorliegende Erfindung umfasst
- eine Bremssteuereinrichtung für eine Anhänger-Schlingerbremseinrichtung,
- eine mit dieser Bremssteuereinrichtung ausgestattete Schlingerbremseinrichtung,
- ein zugehöriges Bremskraft-Steuerungsverfahren für die Steuerung einer Anhänger-Schlingerbremseinrichtung sowie
- ein Softwareprodukt zur Bremskraftsteuerung, das Anweisungen enthält, die bei Ausführung auf einer Datenverarbeitungseinrichtung das Bremskraft-Steuerungsverfahren ausführen. Das Softwareprodukt kann insbesondere ein Softwareprogrammprodukt sein.

Die Bremssteuereinrichtung gemäß der vorliegenden Erfindung ist mit einem Beschleunigungssensor (ESP-Sensor) und mind. einem steuerbaren Bremsaktuator verbindbar oder verbunden. Der Begriff "Beschleunigungssensor" umfasst jede Einrichtung, die dazu geeignet ist, eine Bewegung eines Anhängers derart zu erfassen, dass durch Analyse der Sensordaten eine Schlingerbewegung erkennbar und bevorzugt quantitativ bewertbar ist. Der Sensor kann dabei Beschleunigungen und/oder Geschwindigkeiten translatorisch entlang mindestens einer Achse und/oder rotatorisch um mindestens eine Achse erfassen, wobei die mindestens eine Achse bevorzugt eine Hochachse, Längsachse oder Querachse des Anhängers ist (Raumrichtung).

Der Beschleunigungssensor ist also dazu ausgebildet, eine Schlingerbewegung des Anhängers zu erfassen. Er ist insbesondere dazu ausgebildet und geeignet, eine Querbeschleunigung entlang der Anhängerachse und/oder eine Änderung des Gierwinkels (Gierwinkelrate / Gierrate) um eine Hochachse des Anhängers zu erfassen. Eine Gierwinkelrate ist eine Änderung des Gierwinkels pro Zeiteinheit, d.h. eine Rotationsgeschwindigkeit. Der Beschleunigungssensor gibt ein Erfassungssignal über die Schlingerbewegung (Querbeschleunigungssignal / Gierratensignal) aus, das von einer Datenverarbeitungseinrichtung, insbesondere von der Bremssteuereinrichtung (11) verarbeitbar ist.

Der Bremsaktuator erzeugt eine Betätigungskraft für mind. eine Radbremse eines Anhängers, um eine Stabilisierungsbremsung durchzuführen. Unter einer Stabilisierungsbremsung wird ein Bremseingriff zur Begrenzung einer (festgestellten) Schlingerbewegung des Anhängers verstanden. Die tatsächlich erzeugte Betätigungskraft (Ist-Betätigungskraft) wird in der Regel der Soll-Betätigungskraft entsprechen. Hiervon wird im Folgenden ausgegangen. Es kann eine Kraft-Steuerung (offener Regelkreis) oder eine Kraft-Regelung (geschlossener Regelkreis) für die Umsetzung des Sollwerts für die Betätigungskraft in eine tatsächliche Betätigungskraft vorliegen. Bei einer Kraft-Regelung wird überprüft, wie hoch die tatsächliche Betätigungskraft ausfällt und sie wird der Soll-Betätigungskraft nachgeführt, wobei Abweichungen zwischen der tatsächlichen Betätigungskraft und der Soll-Betätigungskraft minimiert werden. Für die nachfolgende Offenbarung ist es unerheblich, welche Form der Steuerung (offener / geschlossener Regelkreis) vorliegt.

Gemäß einer bevorzugten Ausführung kann ein Kraft-Messglied vorgesehen sein, das die tatsächliche Betätigungskraft direkt oder indirekt erfasst. Das Kraft-Messglied kann eine beliebige Ausbildung haben. Es kann insbesondere an oder in einem Kraftleitmittel vorgesehen sein, das die Betätigungskraft von dem Bremsaktuator auf eine oder mehrere Radbremsen überträgt. Das Kraftleitmittel kann eine Spindel sein, welche ein Bremskraftverteilungsmittel verschiebt. Das Bremskraftverteilungsmittel kann ein Waagbalken sein, der zwischen einer Auflauf-Bremseinrichtung und einer oder mehreren Bremszügen zu den Radbremsen des Anhängers angeordnet ist. Alternativ kann das Bremskraftverteilungsmittel eine beliebige andere Ausbildung haben.

Die Bremssteuereinrichtung ist dazu ausgebildet, eine Stabilisierungsbremsung bei Erkennung einer (unzulässigen) Schlingerbewegung des Anhängers einzuleiten. Die Schlingerbewegung wird insbesondere auf Basis des Erfassungssignals detektiert, das von dem Beschleunigungssensor bezogen ist, d.h. bevorzugt auf Basis eines Erfassungssignals über die Querbeschleunigung / Gierrate des Anhängers.

Die Bremssteuereinrichtung gemäß der vorliegenden Erfindung ist dazu ausgebildet, die Soll-Betätigungskraft während einer Stabilisierungsbremsung zu verändern. Die Veränderung erfolgt in gesteuerter Weise, bzw. gezielt, d.h. die Bremssteuereinrichtung ist dazu vorgesehen und ausgebildet, veränderte Sollwerte für die Betätigungskraft vorzugeben. Die Veränderung der Sollwerte betrifft eine ein- oder mehrfache Änderung des Sollwerts während der Zeitdauer einer Stabilisierungsbremsung. Der Soll-Wert kann dabei kontinuierlich oder diskontinuierlich verändert werden. Bevorzugt ist eine kontinuierliche Veränderung, d.h. eine Veränderung die ohne Sprünge auftritt.

Ursache einer Änderung der (tatsächlichen) Betätigungskraft während einer Stabilisierungsbremsung ist gemäß der vorliegenden Offenbarung also ein Steuerungseingriff.

Nachfolgend wird zur vereinfachten Lesbarkeit auch gelegentlich statt der Formulierung "Veränderung der Soll-Betätigungskraft" nur die vereinfachte Formulierung "Veränderung der Betätigungskraft" verwendet.

Durch die Veränderung der Betätigungskraft während einer Stabilisierungsbremsung kann das Kraftniveau derart angepasst werden, dass die Schlingerbewegung des Anhängers zügig begrenzt oder beendet wird. Dies gelingt selbst dann, wenn keine Kenntnisse oder keine ausreichenden Kenntnisse über die momentane Masse und insbesondere die momentane Masseverteilung am Anhänger vorliegen. Durch die offenbarte Steuertechnik wird es somit ermöglicht, eine Stabilisierungsbremsung auch bei solchen Anhängern mit Erfolg durchzuführen, die in der Praxis mit sehr unterschiedlichen Beladungszuständen unterwegs sein können, und über keine Massenerfassung verfügen.

Eine Schlingerbremseinrichtung gemäß der vorliegenden Erfindung ist dazu vorgesehen und ausgebildet, eine (unzulässige) Schlingerbewegung eines Anhängers zu erkennen und durch einen Bremseingriff zu begrenzen, d.h. eine Stabilisierungsbremsung auszuführen. Die Schlingerbremseinrichtung umfasst die Bremssteuereinrichtung gemäß der vorliegenden Offenbarung sowie mind. einen Beschleunigungssensor, der die Bewegung des Anhängers (1) und damit die Schlingerbewegung erfasst, insbesondere in Form einer Querbeschleunigung entlang der Achse des Anhängers und/oder einer Gierrate um eine Hochachse des Anhängers. Alternativ kann die Schlingerbewegung des Anhängers auf Basis eines anderen geeigneten Parameters erfasst und überwacht werden.

Optional umfasst die Schlingerbremseinrichtung weiterhin mind. einen Bremsaktuator und etwaig eine oder mehrere Radbremsen für den Anhänger.

Ein Bremskraft-Steuerungsverfahren gemäß der vorliegenden Erfindung ist für die Steuerung einer Anhänger-Schlingerbremseinrichtung der vorgenannten Art vorgesehen. Das Bremskraft-Steuerungsverfahren wird bevorzugt von einer Bremssteuereinrichtung der Schlingerbremseinrichtung ausgeführt.

Das Bremskraft-Steuerungsverfahren umfasst zumindest die folgenden Schritte:
Ein Erfassungssignal über die Schlingerbewegung, insbesondere ein Erfassungssignal über die Querbeschleunigung des Anhängers und/oder über die Gierrate, wird bezogen. Der Bezug des Erfassungssignals erfolgt bevorzugt durch Abfrage des Signals eines Beschleunigungssensors. Alternativ kann das Erfassungssignal über die Schlingerbewegung auf beliebige andere Weise bezogen werden, bspw. durch Abfrage von einem externen Steuergerät.

Ein Steuerwert zur Steuerung mind. eines Bremsaktuators der Schlingerbremseinrichtung wird ausgegeben, damit der Bremsaktuator eine Betätigungskraft für mind. eine Radbremse des Anhängers erzeugt. Die Betätigungskraft dient dazu, eine Stabilisierungsbremsung herbeizuführen, d.h. ein Bremseingriff zur Begrenzung einer erkannten Schlingerbewegung des Anhängers. Der Steuerwert legt einen Soll-Wert für die Betätigungskraft fest.

Im dem Bremskraft-Steuerungsverfahren gemäß der vorliegenden Erfindung wird während einer Stabilisierungsbremsung der Steuerwert für die Steuerung des mind. einem Bremsaktuators bzw. die Soll-Betätigungskraft verändert.

Ein Softwareprodukt zur Bremskraft-Steuerung einer Anhänger-Schlingerbremseinrichtung gemäß der vorliegenden Erfindung enthält Anweisungen, die bei Ausführung auf einer Datenverarbeitungseinrichtung, insbesondere auf einer Bremssteuereinrichtung der Anhänger-Schlingerbremseinrichtung, das Bremskraft-Steuerungsverfahren ausführen. Das Softwareprodukt ist bevorzugt auf einem physischen Datenträger gespeichert. Alternativ oder zusätzlich kann das Softwareprodukt durch eine Datenübertragungs-Schnittstelle empfangen oder versendet werden. Durch eine Übertragung des Softwareprodukts in eine bestehende Anhänger-Schlingerbremseinrichtung und insbesondere deren Bremssteuereinrichtung, kann die Steuertechnik gemäß der vorliegenden Offenbarung ggf. bei bestehenden Schlingerbremseinrichtungen nachgerüstet oder aktualisiert werden.

Weitere vorteilhafte Ausführungen sind in den Unteransprüchen, der nachfolgenden Beschreibung sowie den beigefügten Zeichnungen angegeben.

Die Erfindung ist in den Figuren beispielhaft und schematisch dargestellt. Diese zeigen:
- Figur 1:: eine schematische Draufsicht auf das Fahrgestell eines Anhängers mit einer Schlingerbremseinrichtung;
- Figur 2:: eine schematische Darstellung zur Erläuterung des Verlaufs einer Soll-Betätigungskraft während einer Stabilisierungsbremsung sowie eine Darstellung der dabei auftretenden Querbeschleunigung;
- Figur 3:: ein Diagramm zur Erläuterung verschiedener Kraftverlaufskurven für die Erzeugung und Veränderung einer Soll-Betätigungskraft während einer Stabilisierungsbremsung;
- Figur 4:: eine schematische Darstellung des Verlaufs einer Querbeschleunigung, wenn ein Übermaß an Betätigungskraft aufgebracht wird (überbremsen);
- Figur 5:: ein Signalschaltbild zur Erläuterung des Steuer-Informationsflusses für die Steuerungstechnik gemäß der vorliegenden Erfindung.

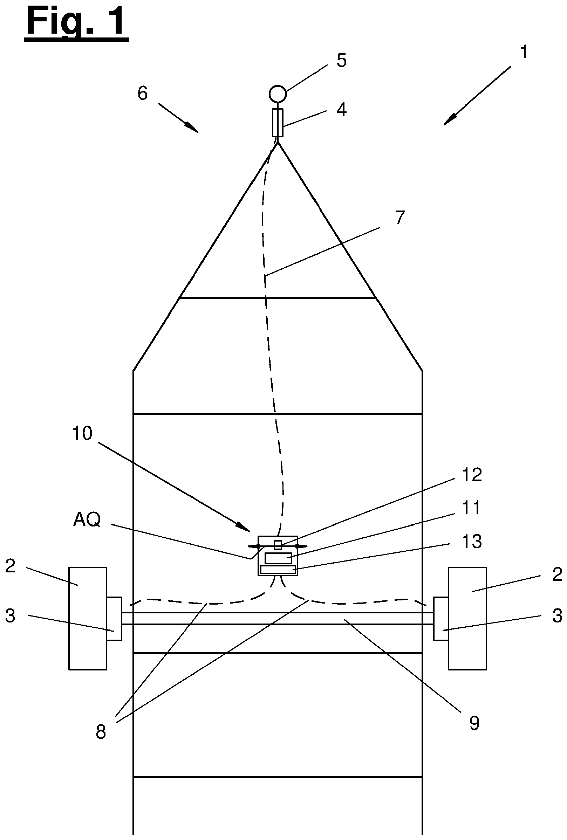

Figur 1 zeigt eine schematische Draufsicht auf ein Fahrgestell eines Anhängers (1). Dieser weist in dem gezeigten Beispiel zwei Räder (2) auf, die über eine Achse (Anhängerachse, 9) mit dem Fahrgestell verbunden sind. An den Rädern (2) sind Radbremsen (3) angeordnet, die über mind. eine Bremsbetätigungseinrichtung aktivierbar und insbesondere gesteuert bestätigbar sind. Eine erste Bremsbetätigungseinrichtung kann eine Auflauf-Bremseinrichtung (4) sein, die gemäß dem Stand der Technik ausgebildet ist. Sie kann über ein oder mehrere Bremskraft-Übertragungsmittel (7, 8) mit den Bremsen (3) verbunden sein. Die Bremskraft-Übertragungsmittel (7, 8) können eine beliebige Ausbildung haben, bspw. als Bremszüge und/oder Bremsstangen. Die Bremskraft-Übertragungsmittel (7, 8) können auch Informations-Übertragungsmittel sein, die eine Steuerinformation über die aufzubringende Bremskraft an die Radbremsen (3) oder deren Steuer- und Betätigungselemente übermitteln.

Eine weitere Bremsbetätigungseinrichtung ist eine Schlingerbremseinrichtung (10) , die einen Beschleunigungssensor (12) sowie eine Bremssteuereinrichtung (11) aufweist. Die Bremssteuereinrichtung (11) ist mit einem Bremsaktuator (13) verbunden, der in dem gezeigten Beispiel Teil der Schlingerbremseinrichtung (10) ist. Alternativ oder zusätzlich können ein oder mehrere Bremsaktuatoren (13) an oder in den Radbremsen (3) enthalten sein.

Gemäß einer besonders bevorzugten Ausführung weist die Schlingerbremseinrichtung (10) mind. einen Bremsaktuator (13) auf, der in Überlagerung zu mind. einer weiteren Bremsbetätigungseinrichtung (4) auf ein Bremskraft-Übertragungsmittel (8) zugreift, durch das die Schlingerbremseinrichtung (10) mit den Radbremsen (3) verbunden ist. Die Überlagerung kann als mechanische Überlagerung oder als Steuerwert-Überlagerung vorliegen. Im Weiteren wird von einer mechanischen Überlagerung ausgegangen.

Über dieselben Bremskraft-Übertragungsmittel (8) und etwaig weitere Bremskraft-Übertragungsmittel (7) können die ein oder mehreren weiteren Bremsbetätigungseinrichtungen (4), insbesondere die Auflauf-Bremseinrichtung (4), mit denselben Radbremsen (3) verbunden sein.

Jede der Bremsbetätigungseinrichtungen kann für sich allein oder in Überlagerung zu den anderen Einrichtungen eine Bremsung herbeiführen. Dementsprechend kann die Schlingerbremseinrichtung (10) als Zusatz-Bremseinrichtung an einem bestehenden Anhänger /1) bzw. Anhängerfahrgestell angebracht werden, um den Anhänger mit der Möglichkeit einer Durchführung von Stabilisierungsbremsungen auszustatten. Die Schlingerbremseinrichtung (10) kann somit eine separate Baugruppe sein.

Die Radbremsen (3) können eine beliebige Bauart haben. Sie können mechanisch aktuierbare und/oder elektrisch aktuierbare Bremsen sein. Der mit der Bremssteuereinrichtung (11) gemäß der vorliegenden Erfindung verbundene Bremsaktuator (13) kann der ohnehin vorliegende Bremsaktuator einer elektrisch aktuierten Radbremse (3) sein. Alternativ kann er ein zusätzlicher Bremsaktuator in der elektrisch aktuierten Radbremse (3) sein. Wiederum alternativ und bevorzugt kann der Bremsaktuator (13) ein mechanischer Aktuator sein, der eine Betätigungskraft auf die Radbremse (3) aufbringt, und zwar entweder direkt oder indirekt durch ein Angreifen an den Bremskraft-Übertragungsmitteln (7, 8).

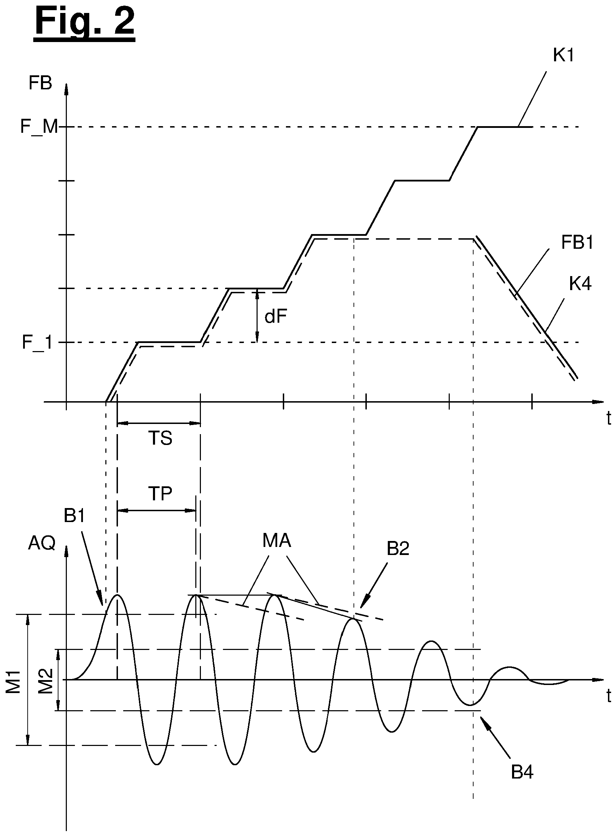

Figur 2 erläutert beispielhaft den Verlauf (FB1) der Soll-Betätigungskraft (FB) für die Radbremsen (3) während einer Stabilisierungsbremsung. Die Soll-Betätigungskraft (FB) wird während der Stabilisierungsbremsung verändert. Im weiteren wird beispielhaft davon ausgegangen, dass die tatsächlich aufgebrachte Betätigungskraft mit der Soll-Betätigungskraft übereinstimmt. Dementsprechend wird nach folgend aus Gründen der vereinfachten Darstellung auf eine Unterscheidung zwischen der Soll-Betätigungskraft (FB) und der tatsächlichen Betätigungskraft unterschieden.

Die Soll-Betätigungskraft (FB) wird bei einer Variante der Erfindung gemäß mind. einer (vorbestimmten) Kraftverlaufskurve (K1, K2, K3) erzeugt und verändert. Alternativ oder zusätzlich können Veränderungen der Betätigungskraft während der Stabilisierungsbremsung gemäß nachfolgend beschriebener Änderungsregeln und/oder gemäß zusätzlicher Steuereingriffe erfolgen, die beim Eintreten bzw. Feststellen des Eintritts bestimmter Bedingungen vorgenommen werden.

Eine (unzulässige) Schlingerbewegung des Anhängers ist durch eine Mehrzahl von Pendelbewegungen gekennzeichnet, die in einem Wiederholungsmuster, d.h. bei einer Periodizität stattfinden. Die Pendelbewegungen erfolgen im Wesentlichen als ein Hin- und Herschwingen in Querrichtung des Anhängers und/oder als ein Hin- und Herdrehen des Anhängers um seine Hochachse. Die Schlingerbewegung kann auch als eine Pendelschwingung des Gespanns um den Kupplungspunkt zwischen Anhänger und Zugfahrzeug aufgefasst werden. Wenn nachfolgend von der Schlingerbewegung gesprochen ist, sind damit eine oder mehrere solche Pendelbewegungen gemeint.

Alle nachfolgend genannten Maßnahmen zur Steuerung der (Soll-) Betätigungskraft bzw. zur Ausgabe eines Steuerwerts (SK), gemäß dem der mind. eine Bremsaktuator (13) eine solche Betätigungskraft (FB) für die mind. eine Radbremse (3) des Anhängers (1) erzeugt, können jeweils ein Ausbildungsmerkmal der Bremssteuereinrichtung (11) sowie ein Verfahrensschritt des Bremskraft-Steuerungsverfahrens sein und ebenso eine Anweisung des Softwareprodukts, die bei Ausführung des Softwareprodukts auf einer Datenverarbeitungseinrichtung den entsprechenden Verfahrensschritt umsetzt. Nachfolgend wird aus Gründen der vereinfachten Darstellung keine Unterscheidung zwischen den vorgenannten Implementierungsarten gemacht. Jede erläuterte Maßnahme bzw. jeder erläuterte Verfahrensschritt steht stellvertretend für alle genannten Implementierungsarten.

Anhänger (1), die von einem Zugfahrzeug wie beispielsweise einem PKW gezogen werden, können aus verschiedenen Gründen in eine Schlingerbewegung / Pendelbewegung geraten. Auslöser kann beispielsweise eine Lenkbewegung am Zugfahrzeug sein oder eine äußere Krafteinwirkung, die beispielsweise aus einem Windstoß oder aus dem Überfahren einer Bodenwelle resultiert.

Während der Schlingerbewegung erzeugen die Reifen der Räder (2) ein Rückstell- und Dämpfungsmoment. Durch die Pendelbewegung ändert sich der Winkel zwischen der Längsachse des Zugfahrzeugs und der Längsachse des Anhängers. Ferner erfährt der Anhänger eine Querbeschleunigung (AQ) durch die er quer zur Längsachse hin- und her wankt oder driftet.

Bei niedrigen Fahrgeschwindigkeiten des Gespanns können solche Schlingerbewegungen von selbst abklingen. Ab einer bestimmten Fahrgeschwindigkeit, der sogenannten kritischen Geschwindigkeit, klingen die Amplituden der Pendelbewegungen jedoch nicht mehr von selbst ab und können sich sogar noch verstärken. Eine solche Situation ist für den Fahrer des Zugfahrzeugs in der Regel nicht kontrollierbar und teilweise erst zu erkennen, wenn sich die Schlingerbewegung bereits erheblich verstärkt hat.

Figur 2 zeigt im unteren Bereich beispielhaft den Verlauf einer Querbeschleunigung (AQ) über der Zeit (t). Das Ausmaß der Querbeschleunigung (AQ) kennzeichnet auch das Ausmaß der vorliegenden Schlingerbewegung des Anhängers (1) .

Die Schlingerbewegung des Anhängers kann durch einen geeigneten Bremseingriff an den Radbremsen (3) beschränkt werden. Die Formulierung "Beschränken der Schlingerbewegung" umfasst zunächst das Vermeiden eines zusätzlichen Aufschwingens und weiterhin eine Abschwächung der Schlingerbewegung bis in einen unkritischen Bereich.

Es hat sich gezeigt, dass eine wirksame Begrenzung der (unzulässigen) Schlingerbewegung nur erreicht wird, wenn eine ausreichend hohe Betätigungskraft (FB) an den Radbremsen (3) erreicht und gehalten wird. Wie hoch die ideale Betätigungskraft ist, hängt von verschiedenen Parametern ab, die häufig nicht oder nicht in ausreichender Genauigkeit bekannt sind. Als besonders relevante Parameter wurden die momentane Masse des Anhängers sowie das Gier-Trägheitsmoment identifiziert. Das Gier-Trägheitsmoment hängt wesentlich von der Verteilung der Masse, d.h. von der Beladung ab. Wenn an dem Anhänger schwere Ladungsgegenstände mit einem großen Abstand zum Achsmittelpunkt angeordnet sind, kann hierdurch das Gier-Trägheitsmoment erheblich erhöht werden, was bei ansonsten gleicher Masse eine Verschärfung der Anfälligkeit für Schlingerbewegungen bedingt.

Somit kann es selbst bei einer bekannten Masse des Anhängers sinnvoll sein, die Bremskraft während einer Stabilisierungsbremsung zu verändern, d.h. die Soll-Betätigungskraft (FB) gemäß der vorliegenden Erfindung zu verändern. Dies gilt insbesondere, wenn nur der Gesamtwert der Masse bekannt ist, nicht jedoch deren Verteilung bzw. die durch die Massenverteilung bewirkten Trägheitsmomente.

Allerdings können derartige Veränderungen der Betätigungskraft nicht beliebig stark und beliebig schnell erfolgen, weil sonst eine zusätzliche Verschärfung oder eine ungünstige Änderung der Schlingerbewegung droht. Insbesondere das sogenannte "Überbremsen" kann eine Verschärfung auslösen. Überbremsen tritt beispielsweise dann auf, wenn der Reibwert zwischen Fahrzeugrad und Fahrbahn unzureichend ist, d.h. wenn die Räder verminderte Haftung haben.

Wenn die (tatsächliche) Betätigungskraft zu schnell oder in Relation zur Schlingerbewegung zu ungünstigen Zeitpunkten oder Zeitabständen erhöht wird (hyperdynamische Bremskraftänderung), kann dies eine zusätzliche Schwingungsanregung für das Gespann herbeiführen, so dass die Schlingerbewegung schlimmstenfalls noch deutlich verstärkt wird. Es wurde ermittelt, dass Anregungsfrequenzen bei ca. 0,7 Hz für einige gängige Anhängertypen ein besonderes Risiko bedeuten.

Wenn andererseits eine zu starke Betätigungskraft erzeugt wird (absolut überhöhte Bremskraft), kann es zum sogenannten Überbremsen kommen, d.h. einem Fahrzustand, bei dem ein sogenanntes Querschieben auftritt. Beim Überbremsen bauen die Reifen nicht mehr genügend Seitenführungskräfte auf, sodass der Anhänger zunächst Überschwingungen zeigt und bei vollständigem Haftungsverlust etwaig zur Seite hin ausbricht.

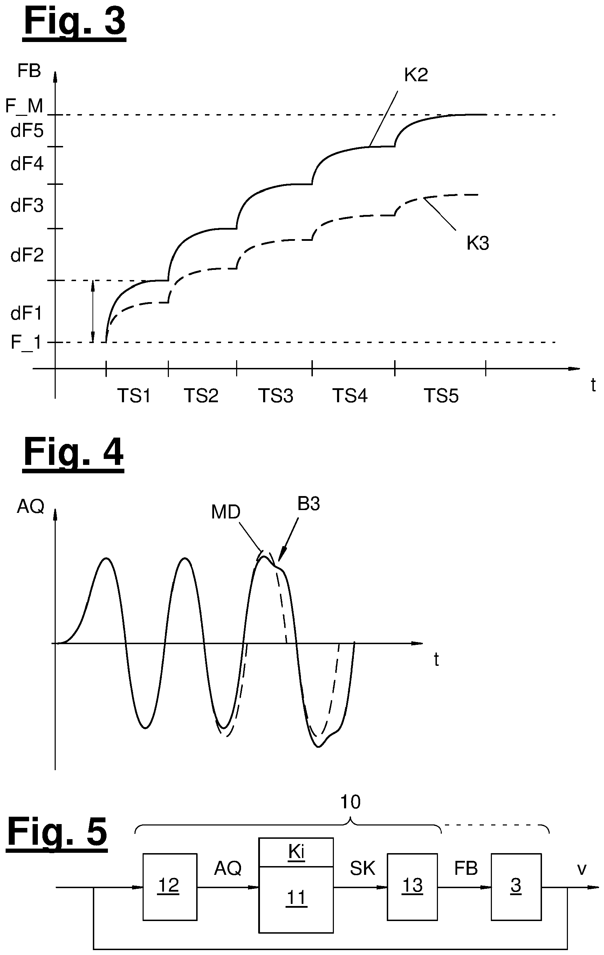

Um solche und andere nachteilige Effekte zu vermeiden, ist gemäß einer Variante der vorliegenden Erfindung vorgesehen, die Soll-Betätigungskraft für eine Stabilisierungsbremsung gemäß mind. einer Kraftverlaufskurve zu erzeugen und zu verändern. Figur 1 zeigt eine erste Kraftverlaufskurve (K1), entlang der nach und nach die Soll-Betätigungskraft gemäß einem als unkritisch identifizierten Verlauf während einer Stabilisierungsbremsung erhöht werden kann. Ferner ist in Figur 1 eine weitere Kraftverlaufskurve (K4) dargestellt, der entlang eine Reduzierung der Soll-Betätigungskraft erfolgen kann, insbesondere um nach einem ausreichenden Bremseingriff die Schlingerbremseinrichtung (10) in einen inaktiven Zustand zurückzuführen. Figur 3 zeigt zwei weitere alternative Kraftverlaufskurven (K2, K3).

Alternativ oder zusätzlich zu den Kraftverlaufskurven (Ki) können verschiedene Steuerregeln vorgesehen sein, um den Verlauf der Soll-Betätigungskraft (FB1) während einer Stabilisierungsbremsung in geeigneter Weise anzupassen. Die Regeln führen dabei zu Änderungen der Soll-Betätigungskraft, die in gleicher Weise in einer entsprechend geänderten Kraftverlaufskurve erreicht werden könnten. Anstelle der Verwendung einer Regel, die zu einer bestimmten Veränderung der Betätigungskraft führt, kann also jeweils die Auswahl einer entsprechend abgewandelten (vorbestimmten) Kraftverlaufskurve genutzt werden.

Für die vorliegende Erfindung kann jede beliebige Art der Detektion einer Schlingerbewegung verwendet werden und entsprechend kann jede beliebige Art der Auslösung einer Stabilisierungsbremsung vorgesehen sein. Nachfolgend wird beispielhaft von einer Erfassung der Querbeschleunigung (AQ) ausgegangen. Die dargestellten Beispiele können in entsprechender Weise für die Erfassung einer Gierrate (nicht dargestellt) angewendet werden. Alternativ oder zusätzlich kann ein anderer geeigneter Parameter erfasst und überwacht werden, mit dem die Schlingerbewegung des Anhängers (1) quantifizierbar ist.

In dem Beispiel von Figur 2 wird eine Schlingerbewegung auf Basis der erfassten Querbeschleunigung (AQ) detektiert. Es können ein oder mehrere Grenzwerte als Auslösemaß (M1) definiert sein, mit denen die erfasste Querbeschleunigung (AQ) verglichen wird. Eine Auslösebedingung (B1) tritt ein, wenn die (momentan) erfasste Querbeschleunigung (AQ) oder der momentane Verlauf der Querbeschleunigung (AQ) ein solches Auslösemaß (M1) erreicht oder überschreitet. In diesem Fall wird eine unzulässige Schlingerbewegung erkannt und somit eine Stabilisierungsbremsung eingeleitet.

Gemäß einer bevorzugten Variante der vorliegenden Erfindung wird die Soll-Betätigungskraft (FB) bei Auslösung einer Stabilisierungsbremsung mit einem vorbestimmten Anfangskraftwert (F_1) erzeugt. Dieser Anfangskraftwert (F_1) kann auf beliebige Weise festgelegt sein. Bevorzugt würde er auf Basis eines bekannten Leergewichts des Anhängers (1) festgelegt.

Die Soll-Betätigungskraft (FB) wird während der Stabilisierungsbremsung erhöht und etwaig weiteren Veränderungen unterzogen. Die Erhöhung der Soll-Betätigungskraft erfolgt bevorzugt allenfalls bis zur Erreichung eines vorgegebenen Maximalwerts (F_M). Auch dieser Maximalwert (F_M) für die Soll-Betätigungskraft (FB) kann beliebig festgelegt sein. Besonders bevorzugt wird er in Abhängigkeit von einem (bekannten) zulässigen Gesamtgewicht des Anhängers (1) inkl. zulässiger Beladung festgelegt. Ggf. kann die Festlegung des Maximalwerts (F_M) unter Berücksichtigung eines Toleranzaufschlags auf das zulässige Gesamtgewicht des Anhängers erfolgen. Dieser Toleranzaufschlag kann beispielsweise berücksichtigen, dass entweder der Anhänger (1) mit einer unzulässig schweren Beladung bestückt sein kann, und/oder dass die Masse der Beladung in ungünstiger Weise auf dem Anhänger (1) angeordnet ist, so dass beispielsweise ein hohes Gier-Trägheitsmoment vorliegt.

Während der Stabilisierungsbremsung erfolgt weiterhin gemäß einer Variante der Erfindung eine Änderung der Soll-Betätigungskraft (FB) bei einem intervall-basierten Schema. Insbesondere kann die Soll-Betätigungskraft (FB) intervall-basiert erhöht werden.

Die Intervalle sind dabei statisch oder dynamisch vorgebbar. In dem Beispiel von Figur 2 sind Erhöhungen der Bremskraft (FB) bei im Wesentlichen konstanten Zeitdauern für Steuerintervalle (TS) vorgesehen. Die Zeitdauer eines solchen Steuerintervalls (TS) kann dabei beliebig festgelegt sein. Besonders bevorzugt ist sie um einen Faktor oder einen Aufschlagswert, insbesondere um einen Sicherheitsfaktor größer bemessen als eine halbe oder volle Periodendauer (TP) der Pendelbewegung bzw. Schlingerbewegung des Anhängers (1). Der Faktor oder Aufschlagswert kann ein statischer Wert oder ein dynamisch angepasster Wert sein. Die Periodendauer (TP) einer Pendelbewegung kann als konstanter Parameter für einen bestimmten Anhängertyp oder eine bestimmte Anhängerklasse vorgegeben sein. Alternativ kann die Periodendauer (TP) (zumindest eine kurze Zeit nach Beginn der Schlingerbewegung) auf Basis der erfassten Querbeschleunigung (AQ) bestimmt werden. Dies ist beispielhaft im unteren Teil von Figur 2 dargestellt, wo die Periodendauer (TP) als eine Zeitdauer zwischen zwei Lokalen in den positiven Maxima der Querbeschleunigung (AQ) erfasst wird.

Wenn die Zeitdauer eines Steuerintervalls (TS) um ein Sicherheitsfaktor größer bemessen wird als die Periodendauer (TP), wird mit einer hohen Wahrscheinlichkeit eine so niedrige Frequenz für die intervall-basierte Erhöhung der Soll-Betätigungskraft (FB) vorgesehen, dass eine zusätzliche Anregung der Schlingerbewegung unterbleibt.

Innerhalb eines Steuerintervalls (TS) wird die Soll-Betätigungskraft (FB) bevorzugt so lange erhöht, bis ein nächst höheres Kraftniveau erreicht wird. Ab dem Erreichen dieses Kraft-Niveaus wird die Soll-Betätigungskraft (FB) bevorzugt bis zum Ende des momentanen Steuerintervalls (TS) konstant gehalten.

In dem Beispiel von Figur 2 sind gemäß der ersten Kraftverlaufskurve insgesamt fünf Steuerintervalle (TS) vorgesehen. Im ersten Intervall wird die Soll-Betätigungskraft (FB) bis zur Erreichung des Anfangskraftwerts (F_1) erhöht und dann auf diesem Niveau konstant gehalten. In den nachfolgenden Steuerintervallen wird das jeweils nächsthöhere Kraft-Niveau gemäß einem jeweils einheitlich gewählten Kraftsteigerungswert (dF) festgelegt. Der Kraftsteigerungswert (dF) kann beliebig definiert sein. Er kann insbesondere die Hälfte, ein Drittel, ein Viertel oder ein sonstiger ganzzahliger Teiler der Gesamtdifferenz zwischen dem Maximalkraftwert (F_M) und dem Anfangskraftwert (F_1) sein.

Der Verlauf der Soll-Betätigungskraft (FB) bis zum Erreichen des nächsthöheren Kraft-Niveaus kann ebenfalls durch eine Kraftverlaufskurve (Ki) festgelegt sein. In den Beispielen für Figur 2 sind bei den dargestellten Kraftverlaufskurven (K1,K4) jeweils lineare Änderungsverläufe mit im Wesentlichen einheitlichen Gradienten vorgegeben. Alternativ können andere Verläufe, insbesondere nicht lineare Verläufe mit entsprechend uneinheitlichen Gradienten vorgesehen sein.

Figur 3 zeigt beispielhaft zwei weitere Kraftverläufe (K2,K3). Dort werden die nächsthöheren Kraft-Niveaus ausgehend vom Anfangskraftwert (F_1) nach uneinheitlichen Kraftsteigerungswerten (dF1-dF5) festgelegt, wobei insbesondere ein degressives Schema vorgesehen ist, d.h. sukzessiv kleinere Kraftsteigerungswerte (dF1-dF5).

Ferner sind in dem Beispiel von Figur 3 uneinheitliche Steuerintervalle (TS) vorgesehen, die hier nach einem progressiven Schema festgelegt sind, d.h. sukzessiv längere Zeitdauern für einander folgende Steuerintervalle (TS1-TS5) .

Die vorgenannten Festlegungsschemata können in der gezeigten Kombination oder in einer beliebigen Kombination mit den in Figur 2 gezeigten einheitlichen Festlegungen vorgesehen sein.

Das progressive Festlegungsschema für die Zeitdauer der Steuerintervalle (TS1-TS5) trägt dem Umstand Rechnung, dass das Erreichen von höheren Kraft-Niveaus eher zu erwarten ist, wenn eine hohe Anhängermasse oder aber ein hohes Gier-Trägheitsmoment vorliegt. In solchen Fällen könnte eine zusätzliche Anregung durch das intervall-basierte Erhöhen der Betätigungskraft besonders schwerwiegende Folgen haben. Die sukzessive Verlängerung der Steuerintervalle (TS1-TS5) vermeidet einerseits eine gleichförmige Anregung, weil durch die unterschiedlichen Zeitdauern der Intervalle keine gleichbleibende Grundfrequenz erzeugt wird. Andererseits trägt die sukzessive Verlängerung der Steuerintervalle (TS1-TS5) dem Umstand Rechnung, dass eine höhere Masse des Anhängers tendenziell zu einem trägeren Ansprechverhalten führt.

Das degressive Festlegungsschema für die Kraftsteigerungswerte (dF1-dF5) trägt dem Umstand Rechnung, dass mit einer Erhöhung des Absolutwertes der Soll-Betätigungskraft (FB) auch das Risiko des Überbremsens steigt. Andererseits kann davon ausgegangen werden, dass selbst bei einem Anhänger, der bei vollständiger Ausschöpfung der des zulässigen Gesamtgewichts beladen ist, schon die beispielsweise erste, zweite oder dritte Erhöhung der Soll-Betätigungskraft (FB) einen erheblichen Beitrag zur Deeskalation bringt und zumindest ein weiteres Aufschwingen verhindert, selbst wenn die Soll-Betätigungskraft (FB) noch nicht ausreicht, um die Schlingerbewegung auf ein gänzlich unkritisches Maß zu reduzieren.

Die Bremssteuereinrichtung (11) bzw. das Softwareprodukt gemäß der vorliegenden Erfindung umfasst gemäß einer Variante eine Mehrzahl von Kraftverlaufskurven (K1-K4). Insbesondere können mehrere Sätze von Kraftverlaufskurven (K1-K4) hinterlegt sein, die beispielsweise für unterschiedliche Typen von Anhängern und/oder unterschiedliche Umgebungsbedingungen vorgesehen sind.

Bei der Installation bzw. Ersteinrichtung der Schlingerbremseinrichtung (10) kann eine erste Vorauswahl aus diesen Kraftverlaufskurven getroffen werden. Während des Betriebes können dann weitere Auswahlen erfolgen.

Beispielsweise kann eine Umgebungstemperatur erfasst werden, insbesondere durch einen Temperatursensor, der ein Bestandteil der Bremssteuereinrichtung (11) oder der Schlingerbremseinrichtung (10) ist. Auf Basis dieser erfassten Umgebungstemperatur kann dann ein Satz von Kraftverlaufskurven oder eine bestimmte Kraftverlaufskurve ausgewählt werden. So kann beispielsweise bei Umgebungstemperaturen, bei denen mit Frostbildung oder Glatteis gerechnet werden muss, eine Kraftverlaufskurve ausgewählt werden, die einen reduzierten Anfangskraftwert (F_1) und/oder reduzierte Kraftsteigerungswerte (dF) umfasst. Dies ist beispielhaft in Figur 3 dargestellt, wo die Kraftverlaufskurve (K3) gegenüber der Kraftverlaufskurve (K2) reduzierte Kraftsteigerungswerte (dF1-dF5) aufweist.

Während einer Stabilisierungsbremsung wird bevorzugt der Verlauf der Querbeschleunigung (QA) überwacht. Die Beibehaltung oder Neuauswahl einer Kraftverlaufskurve (K1-K4) kann bevorzugt auf Basis einer Analyse des Verlaufs der Querbeschleunigung (QA) erfolgen. Alternativ oder zusätzlich können verschiedene Regeln vorgesehen sein, um die Soll-Betätigungskraft (FB) in Abhängigkeit von der Analyse des Verlaufs der Querbeschleunigung (QA) zu beeinflussen. Ein regelbasiertes Verhalten und die Verwendung von einer oder mehreren Kraftverlaufskurven (K1-K4) können dabei in beliebiger Kombination oder jeweils für sich allein Verwendung finden.

Wie oben erläutert wurde, ist während einer Stabilisierungsbremsung bevorzugt eine Erhöhung der Soll-Betätigungskraft (FB) vorgesehen, die insbesondere intervall-basiert erfolgt.

Die Veränderung der Soll-Betätigungskraft (FB) und insbesondere die Veränderung/Erhöhung der Soll-Betätigungskraft (FB) gemäß einer gewählten Kraftverlaufskurve (K1) wird bevorzugt so lange fortgesetzt, bis mindestens eine Bedingung (B2,B3,B4) eintritt, welche die Auswahl einer anderen Kraftverlaufskurve (K4) und/oder einen regelbasierten Eingriff indiziert.

Im Rahmen der vorliegenden Offenbarung können eine, zwei oder mehrere derartige Bedingungen festgelegt sein. Besonders bevorzugt ist zumindest eine Wirkbedingung oder zumindest eine Übermaßbedingung oder zumindest eine Abschlussbedingung oder eine beliebige Unterkombination der vorgenannten Bedingungen vorgesehen.

Bei Eintritt der Wirkbedingung (B2) und/oder der Übermaßbedingung (B3) und/oder der Abschlussbedingung (B3) wird die Soll-Betätigungskraft (FB) gemäß einer neu ausgewählten Kraftverlaufskurve (K4) erzeugt und/oder verändert. Alternativ oder zusätzlich wird bei Eintritt einer Wirkbedingung (B2) und/oder einer Übermaßbedingung (B3) und/oder einer Abschlussbedingung (B4) der weitere Verlauf der Soll-Betätigungskraft (FB) regelbasiert festgelegt.

Durch eine Wirkbedingung (B2) wird bevorzugt festgestellt, dass durch die gegebenenfalls erhöhte Soll-Betätigungskraft (FB) eine ausreichende Verminderung der Schlingerbewegung des Anhängers festgestellt werden kann. Die Wirkbedingung (B2) kann zu diesem Zweck in beliebiger geeigneter Form festgelegt sein. Gemäß einer bevorzugten Ausführung wird eine Wirkbedingung (B2) erreicht, wenn (auf Basis der Überwachung der Querbeschleunigung (AQ)) festgestellt wird, dass die Querbeschleunigung (AQ) um ein festgelegtes Schwächungsmaß (MS) abgenommen hat. Das Schwächungsmaß (MS) kann auf beliebige Weise und gegenüber einem beliebigen Referenzwert definiert sein. In der bevorzugten Ausführungsvariante von Figur 2 ist das Schwächungsmaß (MS) eine festgelegte (minimale) Amplitudenminderung. Als Referenzwert für die Amplitudenminderung kann jeweils ein letztes lokales Maximum oder Minimum der Querbeschleunigung (AQ) dienen, wobei eine Amplitudenminderung im Vergleich zu dem nächsten und/oder übernächsten lokalen Maximum ermittelt wird.

Wenn die ermittelte Amplitudenminderung stärker ausgeprägt ist als die festgelegte (minimale) Amplitudenminderung, ist das festgelegte Schwächungsmaß (MS) erreicht oder überschritten, so dass von einem ausreichend wirksamen Eingriff durch die Stabilisierungsbremsung ausgegangen wird. In diesem Fall ist es nicht erforderlich, die Soll-Betätigungskraft (FB) noch weiter zu erhöhen. Dementsprechend wird gemäß der vorliegenden Offenbarung vorgeschlagen, dass die Soll-Betätigungskraft (FB) bei Eintreten einer Wirkbedingung (B2) auf dem momentanen Kraftniveau gehalten wird.

Die Abnahme der Querbeschleunigung (AQ) um ein festgelegtes Schwächungsmaß (MS) stellt ein erstes Beispiel für die Definition von Bedingungen dar, bei deren Erfüllung eine andere Kraftverlaufskurve ausgewählt oder ein regelbasierter Eingriff erfolgt.

In gleicher Form können beliebige andere Bedingungen und insbesondere ebenso eine Übermaßbedingung (B3) und/oder eine Abschlussbedingung (B4) definiert sein. So kann eine jeweilige Bedingung (B2,B3,B4) jeweils dann erfüllt sein, wenn der Verlauf der Querbeschleunigung (AQ) während einer Stabilisierungsbremsung ein vorbestimmtes Änderungsmaß (M2,MD,MS) erreicht oder überschreitet. Das Schwächungsmaß (MS) war ein erstes Beispiel für ein solches vorbestimmtes Änderungsmaß (MD).

Gemäß einer weiteren bevorzugten Ausführung kann eine Übermaßbedingung (B3) erreicht werden, wenn sich die Schwingungsform der erfassten Querbeschleunigung (AQ) um ein vorbestimmtes Deformationsmaß (MD) ändert. Das Deformationsmaß (MD) kann auf beliebige Weise festgelegt sein. Es dient insbesondere der Erkennung, ob eine übermäßige Erhöhung der Soll-Betätigungskraft (FB) vorliegt. Dies wird beispielhaft anhand von Figur 4 erläutert.

Wie oben bereits erläutert wurde, kann das Überbremsen einen kritischen Zustand herbeiführen. Beim Überbremsen nehmen die Amplituden des Knickwinkels deutlich zu, so dass das Gespann aus Zugfahrzeug und Anhänger (1) schnell in einen instabilen Zustand geraten kann. Es wurde festgestellt, dass beim Überbremsen ein Querschieben auftritt, das durch eine Änderung des Schwingungsverlaufs der Querbeschleunigung (AQ) identifiziert werden kann. Das Phänomen des Querschiebens führt insbesondere zu einer zeitlichen Verzögerung in einer fallenden Flanke der Schwingung kurz nach Erreichung eines lokalen Maximums der Querbeschleunigung (AQ). Durch das Querschieben wird auch eine Veränderung des Frequenzverhaltens bzw. der Periodendauer (TP) der Pendelbewegung erzeugt, so dass insbesondere der Nulldurchgang der Querbeschleunigung (AQ) im Vergleich zu vorhergehenden Teilverläufen der Querbeschleunigung (AQ) später erfolgt.

Auf Basis der vorgenannten Phänomene kann ein Deformationsmaß (MD) in unterschiedlicher Weise definiert werden. Beispielsweise kann auf Basis einer oder mehrerer vorhergehender Teilschwingungen in jedem Moment während der Stabilisierungsbremsung ein weiterer Verlauf der Querbeschleunigung antizipiert werden. Ein Deformationsmaß (MD) kann einen solchen antizipierten Verlauf unter Berücksichtigung einer maximalen tolerierten Verstärkung oder Veränderung der Schlingerbewegung beinhalten. In den Beispielen von Figur 4 sind nach verschiedenen Nulldurchgängen der Querbeschleunigung (AQ) jeweils Antizipationskurven für die nächste Halbschwingung als Deformationsmaß (MD) eingezeichnet. Sobald der tatsächlich festgestellte Verlauf der Querbeschleunigung (AQ) ein solches Deformationsmaß (MD) ein oder mehrfach überschreitet, kann von dem Vorliegen einer Überbremsung ausgegangen werden.

Dementsprechend ist bevorzugt vorgesehen, dass die Soll-Betätigungskraft (FB) bei Eintreten einer Übermaßbedingung (B3) verringert wird. Die Verringerung der Betätigungskraft (FB) kann auf beliebige Weise erfolgen, insbesondere durch Auswahl einer weiteren Kraftverlaufskurve (K4), durch eine regelbasierte Änderung oder durch eine Rückkehr zum letzten vorherigen Kraft-Niveau.

Auf Basis der Überwachung der Querbeschleunigung (AQ) kann ferner festgestellt werden, wann eine Stabilisierungsbremsung ausreichende Wirkung gezeigt hat, so dass die Schlingerbewegung auf ein unkritisches Maß begrenzt worden ist.

So kann gemäß der beispielhaften Darstellung in Figur 2 eine Abschlussbedingung (B4) definiert sein, die erreicht wird, wenn die Querbeschleunigung (AQ) auf ein vorbestimmtes Abklingmaß (M2) zurückgegangen ist.

Bevorzugt wird die Soll-Betätigungskraft (FB) bei Eintreten einer Abschlussbedingung (B4) wieder vermindert. Die Verminderung der Soll-Betätigungskraft (FB) erfolgt bevorzugt gemäß einer vorbestimmten Kraftreduktionskurve (K4). Diese kann insbesondere einen solchen Änderungsgradienten für die Verminderung der Soll-Betätigungskraft (FB) vorsehen, dass ein unerwünschtes neues Anregen einer etwaig noch geringfügig vorhandenen Schlingerbewegung ausgeschlossen wird. Weiterhin erfolgt die Verminderung der Soll-Betätigungskraft (FB) bevorzugt bis in den inaktiven Zustand der Schlingerbremseinrichtung (10).

Figur 5 zeigt beispielhaft einen Informationsfluss zur Durchführung eines Bremskraft-Steuerungsverfahrens gemäß der vorliegenden Erfindung. Das Bremskraft-Steuerungsverfahren wird durch eine Datenverarbeitungseinrichtung ausgeführt, die weiterhin bevorzugt Bestandteil der Bremssteuereinrichtung (11) ist. Die Datenverarbeitungseinrichtung kann von beliebiger Art sein. Es kann sich bevorzugt um eine programmierbare Datenverarbeitungseinrichtung handeln, die mit einem physikalischen Speicher verbunden ist. In den physikalischen Speicher kann ein Softwareprodukt gemäß der vorliegenden Erfindung geladen werden.

Das Softwareprodukt enthält bevorzugt mindestens eine Kraftverlaufskurve (K1-K4). Die ein oder mehreren Kraftverlaufskurven (K1-K4) oder Sätze von Kraftverlaufskurven können entsprechend in dem physikalischen Speicher der Datenverarbeitungseinrichtung bzw. der Bremssteuereinrichtung (11) abgelegt sein. Weiterhin können in dem Softwareprodukt weitere Anweisungen und Regeln enthalten sein, um während einer Stabilisierungsbremsung gemäß den obigen Ausführungen den Verlauf der Querbeschleunigung (AQ) zu überwachen und/oder die genannten Steuerungsmaßnahmen auszuführen.

Bei der Ausführung des Softwareprodukts wird dementsprechend ein Steuerwert (SK) zur Steuerung des mindestens einen Bremsaktuators (13) derart berechnet oder verändert, dass die Soll-Betätigungskraft (FB) für eine Stabilisierungsbremsung gemäß den oben genannten Maßnahmen und insbesondere gemäß mindestens einer Kraftverlaufskurve (K1-K4) erzeugt und verändert wird.

Das Softwareprodukt umfasst weiterhin bevorzugt die ein oder mehreren Änderungsmaße (M2,MD,MS) und zugehörige (Regel-) Anweisungen, nach denen der Verlauf der Querbeschleunigung (AQ) mit diesen Änderungsmaßen (M2,MD,MS) verglichen wird, um die vorgenannten Reaktionen herbeizuführen.

Die Schlingerbremseinrichtung (10) kann neben dem Beschleunigungssensor (12) und der Bremssteuereinrichtung (11) mindestens einen Bremsaktuator (13) und gegebenenfalls ein oder mehrere Radbremsen (3) umfassen.

Weiterhin kann die Schlingerbremseinrichtung (10) mindestens einen Temperatursensor umfassen.

Abwandlungen der Erfindung sind in verschiedener Weise möglich. Insbesondere können alle zu den Ausführungsbeispielen beschriebenen, gezeigten oder beanspruchten Merkmale im Rahmen der Erfindung miteinander kombiniert oder gegeneinander ersetzt werden.

Der Anhänger (1) kann eine beliebige Bauart und Größe haben. Es kann sich insbesondere um einen Caravan oder einen Nutzanhänger handeln. Es können ein oder mehrere Kraftverlaufskurven oder Sätze von Kraftverlaufskurven vorgesehen sein, die für bestimmte Sonderformen von Anhängern vorgesehen sind. So kann beispielsweise bei einer Schlingerbremseinrichtung für einen Anhänger (1) mit einem Flüssigkeitstank eine deutliche Erhöhung der Zeitdauer für die ein oder mehreren Steuerintervalle (TS) vorgesehen sein. Je nach Füllstand in dem Flüssigkeitstank können Schwallbewegungen ausgelöst werden, die etwaig bei einem anderem Frequenzverhalten vorliegen, als die für den Beschleunigungssensor insgesamt erkennbare Schlingerbewegung des Anhängers (1). Die Festlegung von längeren Zeitdauern für die Steuerungsintervalle, insbesondere bei einem progressiven Schema, verringert die Gefahr der Anregung einer überlagerten Schwall-Pendelbewegung.

Wenn der Anhänger (1) und/oder die Schlingerbremseinrichtung (10) und/oder die Bremssteuereinrichtung (11) über eine Massenerkennung verfügt, kann dies in verschiedener Weise vorteilhaft genutzt werden. Beispielsweise können auf Basis einer gemessenen oder in sonstiger Weise erfassten momentanen Masse ein oder mehrere Kraftverlaufskurven und/oder ein Satz von Kraftverlaufskurven ausgewählt werden. Alternativ oder zusätzlich können der Anfangskraftwert (F_1) und/oder maximal Kraftwert (F_M) verändert werden. Beispielsweise kann ein Anfangskraftwert (F_1) derart festgelegt werden, dass er eine ideale Bremsung unter Annahme der gemessenen Masse bei einem minimalen zu erwartenden Gier-Trägheitsmoment vorgibt. Ein Maximalkraftwert (F_M) kann entsprechend festgelegt werden für eine um einen Toleranzwert erhöhte Masse und/oder ein zu erwartendes maximales Gier-Trägheitsmoment, dass aus einer besonders ungünstigen Ladungsverteilung folgen könnte.

Die Erfassung der momentanen Masse kann für die Beladung separat (bei bekannter Anhänger Leer-Masse) oder für den Anhänger inklusive Beladung erfolgen.

Gemäß einem besonders bevorzugten Aspekt der vorliegenden Erfindung, der für sich allein oder in Kombination mit den sonstigen Teilen der vorliegenden Offenbarung nutzbar ist, kann eine Bestimmung des momentanen Beladungszustands und/oder eine Bestimmung des momentanen Massenverteilungszustands erfolgen. Hierzu werden bevorzugt zwei oder mehr Massen-Werte oder Massen-Intervalle und/oder zwei oder mehr Trägheitsmoment-Werte oder Trägheitsmoment-Intervalle vorbestimmt, aus denen eine Auswahl erfolgen kann. Die Auswahl kann auf Basis einer Analyse (mindestens) eines erfassten Bewegungsparameters und einer daraus ermittelten Resonanzfrequenz oder Eigenfrequenz des Anhängers (1) erfolgen. Hierzu eignen sich grundsätzlich verschiedene Bewegungsparameter. Besonders bevorzugt wird die Erfassung auf Basis des Signals eines Beschleunigungssensors (ESP-Sensor) und einer Resonanzfrequenzanalyse / Eigenfrequenzanalyse durchgeführt. Alternativ oder zusätzlich kann mindestens ein separater Beschleunigungssensor für die Resonanzfrequenzanalyse / Eigenfrequenzanalyse vorgesehen sein.

Für jeden vorbestimmten Wert oder jedes vorbestimmte Intervall, oder für eine Kombination von vorbestimmten Werten / Intervallen können eine oder mehrere Kraftverlaufskurven hinterlegt sein. Es hat sich allerdings als sinnvoll erwiesen, Beladungszustände und/oder Massenverteilungszustände zu definieren, denen die vorbestimmten Werte oder Intervalle zugeordnet sind, und die Kraftverlaufskurven diesen Zuständen zuzuordnen. Durch die Bestimmung von Beladungszuständen und/oder Massenverteilungszuständen können allerdings die Zahl der zu unterscheidenden Fälle reduziert und/oder auf die relevanten Zustände ausgerichtet werden. Fern er erleichtert die Definition von Zuständen die Entwicklungstätigkeit der Ingenieure sowie das Verständnis der Nutzer.

Als Bewegungsparameter wird bevorzugt die Vertikalbeschleunigung verwendet, d.h. es wird ein Signal über die Vertikalbeschleunigung ausgewertet, das von dem Beschleunigungssensor (12) bezogen wird. Diese Auswertung kann durch Bremssteuereinrichtung (11) und/oder durch ein separates Steuermittel erfolgen.

Alternativ oder zusätzlich kann ein anderer Bewegungsparameter zu Grunde gelegt werden, bspw. eine Nickrate (Änderung des Nickwinkels) und/oder eine Wankrate (Änderung des Wankwinkels) und/oder eine Gierrate.

Der Beschleunigungssensor für die Massenbestimmung / Beladungsbestimmung kann derselbe Sensor (12) sein, der für die Überwachung der Anhängerbewegung vor und/oder während einer Stabilisierungsbremsung genutzt wird. Entsprechend wird bevorzugt ein multi-axialer Beschleunigungssensor vorgesehen. Dies kann ein 2-achsier oder 3-achsiger Sensor sein. Überwacht werden bevorzugt zumindest zwei der folgenden Parameter:
- Vertikalbeschleunigung (entlang Längsachse des Anhängers);
- Querbeschleunigung (entlang Querachse des Anhängers);
- Gierrate (um Hochachse des Anhängers)

Eine besonderes einfache und mit vergleichsweise geringem Rechenaufwand durchführbare Variante sieht vor, dass auf Basis des erfassten Bewegungsparameters eine Resonanzfrequenz oder eine Eigenfrequenz ermittelt wird, die in einem beschränkten Frequenzbereich liegt, insbesondere im Bereich zwischen 0 Hz und 10 Hz. Hierzu kann insbesondere eine Fourier-Analyse durchgeführt werden.

Aus der ermittelten Resonanzfrequenz / Eigenfrequenz lässt sich die momentane Masse des Anhängers inklusive Beladung und/oder ein momentanes Trägheitsmoment des Anhängers inklusive Beladung mit ausreichender Genauigkeit ableiten.

Besondere Vorteile ergeben sich für Anhänger mit einer Federung, die zwischen einem ersten und einem zweiten Teil des Anhängers wirkt (Feder-Dämpfersystem mit gekoppelten Massen), wenn mindestens ein Bewegungsparameter an jedem der Teile separat erfasst wird. So ist es möglich, einerseits einen Bewegungsparameter an einem ersten Teil des Anhängers zu erfassen, auf dem die Ladung angeordnet ist, und andererseits einen weiteren Bewegungsparameter an einem zweiten Teil des Anhängers zu erfassen, der in möglichst engem Kontakt zur Fahrbahnfläche steht. So kann ein erster Beschleunigungssensor beispielsweise an einer Ladefläche oder einem Fahrgestell des Anhängers (1) angebracht sein, während ein zweiter Beschleunigungssensor an einem Anhängerrad (2) oder an einer Anhängerachse (9) angebracht ist, das bzw. die gegenüber der Ladefläche oder dem Fahrgestell gefedert und gegebenenfalls gedämpft gelagert ist.

Das unterschiedliche Schwingungsverhalten des ersten Teils und des zweiten Teils des Anhängers können für die Ermittlung der Eigenfrequenz / Resonanzfrequenz vorteilhaft genutzt werden. Die Beschleunigungen, die an dem zweiten Teil erfasst werden, insbesondere die Vertikalbeschleunigungen, können als Anregung aufgefasst werden, während die Beschleunigungen an dem zweiten Teil als die resultierende Bewegung aufgefasst werden. Wenn Anregung und resultierende Beschleunigung als separate Größen vorliegen, kann die Eigenfrequenz / Resonanzfrequenz mit höherer Genauigkeit erfasst werden. Ferner wird es ermöglicht, die Masse und oder das Trägheitsmoment der Beladung separat zu erfassen, d.h..

Besonders bevorzugt ist eine beschränkte Zahl von vorgegebenen Zuständen (Beladungszustände und/oder Massenverteilungszustände) definiert, die zumindest durch einen Masse-Wert oder ein Masse-Intervall gekennzeichnet sind. Beispiele für vorbestimmte Beladungszustände können sein:
- Nicht beladener Anhänger (0% der zulässigen Zuladung)
- Teilweise beladener Anhänger (50% der zulässigen Zuladung)
- Voll beladener Anhänger (100% der zulässigen Zuladung)
- Übermäßig beladener Anhänger (125% der zulässigen Zuladung)

(Die Zahlenwerte in den vorgenannten Beispielen stellen lediglich Richtwerte dar, die an den jeweiligen Anwendungsfall anzupassen sind. Alternativ oder zusätzlich zu den genannten Beladungszuständen können andere Beladungszustände mit abweichenden Masse-Werten oder Masse-Intervallen festgelegt sein.)

Es kann allerdings ausreichend sein, lediglich zwei oder mehr Masse-Werte und/oder Masse-Intervalle vorzubestimmen, und einen Masse-Werte oder ein Masse-Intervall auf Basis einer Analyse eines erfassten Bewegungsparameters und einer ermittelten Resonanzfrequenz oder Eigenfrequenz des Anhängers (1) auszuwählen. In einem solchen Fall kann auf die explizite Definition eines Beladungszustands verzichtet werden.

Weiterhin können zwei oder mehr Trägheitsmoment-Werte oder Trägheitsmoment-Intervalle vorbestimmt sein. Die vorgegebenen Beladungszustände können auch anhand eines Trägheitsmoment-Wertes oder eines Trägheitsmoment-Intervalls festgelegt sein, insbesondere in Bezug auf das Gier-Trägheitsmoment. So kann insbesondere für jeden Masse-Wert bzw. jedes Masse-Intervall zusätzlich eine Unterscheidung in folgende vorbestimmte Massenverteilungszustände erfolgen:
- Minimales (Gier-) Trägheitsmoment (bspw. Masse konzentriert über Achs-Mittelpunkt)
- Ausgeglichenes (Gier-) Trägheitsmoment (bspw. Masse gleichmäßig auf Ladungsfläche verteilt)
- Kritisches (Gier-) Trägheitsmoment (bspw. einzelne schwere Ladungsgüter mit großem Abstand zum Achs-Mittelpunkt)

(Alternativ können anstelle der Masse-Werte oder Masse-Intervalle ausschließlich einen Trägheitsmoment-Wert und/oder ein Trägheitsmoment-Intervall zugeordnet sein.)

Gemäß einer bevorzugten Ausführung wird ein vorbestimmter Beladungszustand ausgewählt auf Basis einer Analyse des erfassten Bewegungsparameters (insb. Vertikalbeschleunigung) und einer ermittelten Resonanzfrequenz oder Eigenfrequenz. Weiterhin ist bevorzugt für jeden vorbestimmten Beladungszustand mindestens eine Kraftverlaufskurve hinterlegt, insbesondere mindestens ein Satz von Kraftverlaufskurven. Somit kann auf Basis einer Analyse des erfassten Bewegungsparameters und einer ermittelten Resonanzfrequenz oder Eigenfrequenz ebenfalls eine Kraftverlaufskurve oder ein Satz von Kraftverlaufskurven ausgewählt werden.

Die ein oder mehreren Kraftverlaufskurven können entsprechend dynamisch berechnet und insbesondere skaliert werden.

Es stellt einen weiteren Aspekt der vorliegenden Erfindung dar, dass ein Satz von Kraftverlaufskurven (K1, K2, K3) ausgewählt wird
- auf Basis einer erfassten Umgebungstemperatur und/oder
- auf Basis einer erfassten oder vorbekannten Masse des Anhängers (1), und/oder
- auf Basis einer erfassten, vorbekannten oder geschätzten Beladung des Anhängers (1), und/oder
- auf Basis eines ermittelten Beladungszustands des Anhängers (1) und/oder
- auf Basis eines ermittelten Massenverteilungszustands am Anhänger (1).

Es stellt einen weiteren Aspekt der vorliegenden Erfindung dar, dass zwei oder mehr Beladungszustände vorbestimmt sind, wobei insbesondere ein Beladungszustand auf Basis einer Analyse eines erfassten Bewegungsparameters und einer ermittelten Resonanzfrequenz oder Eigenfrequenz des Anhängers (1) ausgewählt wird.

Es stellt einen weiteren eigenständigen Aspekt der vorliegenden Erfindung dar, dass zwei oder mehr Masse-Werte oder Masse-Intervalle für die Masse des Anhängers (1) oder der Beladung vorbestimmt sind, und wobei ein Masse-Werte oder Masse-Intervall auf Basis einer Analyse eines erfassten Bewegungsparameters und einer ermittelten Resonanzfrequenz oder Eigenfrequenz des Anhängers (1) ausgewählt wird.

Die tatsächliche Betätigungskraft kann während einer Stabilisierungsbremsung kurzzeitig in Abweichung von dem in Figuren 2 und 3 skizzierten Verlauf kurzzeitig abgesenkt werden, um die Radbremsen zu lüften. Dies hat den Vorteil, dass die tatsächliche Betätigungskraft bei der nächsten Erhöhung der Soll-Betätigungskraft genauer nachfolgt und insbesondere ungleichmäßige Kraftverteilungen zwischen den linken und rechten Radbremsen reduziert oder vermieden werden, die etwaig entstehen könnten, wenn zwei oder mehr Radbremsen über ein Bremskraft-Verteilungsmittel wie beispielsweise einen Waagbalken durch einen gemeinsamen Bremsaktuator betätigt werden. Ferner kann das kurzzeitige Absenken der tatsächlichen Bremskraft von Vorteil sein, wenn die Bremskraft nur indirekt erfasst wird, beispielsweise durch Bestimmung des Ausfahrweges eines Kraftleitmittels, das von dem Bremsaktuator bestimmt wird. Das Verringern der tatsächlichen Betätigungskraft kann auf einen beliebigen Wert erfolgen, bspw. auf 75 Prozent, 50 Prozent, 25 Prozent oder 0 Prozent des vorherigen Bremskraft-Niveaus.

### BEZUGSZEICHENLISTE

- 1: Anhänger / Anhängerfahrgestell
- 2: Rad
- 3: Radbremse
- 4: Auflauf-Bremseinrichtung
- 5: Anhängekupplung
- 6: Zugdeichsel
- 7: Bremskraft-Übertragungsmittel / Bremszug / Bremsstange
- 8: Bremskraft-Übertragungsmittel / Bremszug / Bremsstange
- 9: Achse / Anhängerachse
- 10: Schlingerbremseinrichtung
- 11: Bremssteuereinrichtung
- 12: Beschleunigungssensor / ESP-Sensor
- 13: Bremsaktuator / Überlagerungsaktuator

- AQ: Querbeschleunigung
- B1: Auslösebedingung
- B2: Wirkbedingung
- B3: Übermaßbedingung
- B4: Abschlussbedingung
- F_M: Maximalkraftwert / vorgegebener Maximalwert
- F_1: Anfangskraftwert / vorgegebener Startwert
- dF: Kraftsteigerungswert
- FB: Betätigungskraft für Radbremse(n)
- FB1: Erster Verlauf der Soll-Betätigungskraft
- Ki: Kraftverlaufskurve (erste, zweite ...)
- L: Längsrichtung / Zugrichtung
- M1: Auslösemaß
- M2: Abklingmaß
- MD: Deformationsmaß
- MS: Schwächungsmaß
- Q: Querrichtung / Achsrichtung
- SB: Bremskraft-Steuerwert
- TP: Periodendauer Pendelbewegung (geschätzt / gemessen)
- TS: Steuerintervall
- v: Anhängerbewegung

## Patentansprüche

1. Bremssteuereinrichtung (11) für eine Anhänger-Schlingerbremseinrichtung (10), wobei die Bremssteuereinrichtung (11) mit einem Beschleunigungssensor (12) und mindestens einem steuerbaren Bremsaktuator (13) verbindbar oder verbunden ist, und wobei der Beschleunigungssensor (12) eine Schlingerbewegung eines Anhängers (1) erfasst und der Bremsaktuator (13) eine Betätigungskraft (FB) für mindestens eine Radbremse (3) eines Anhängers (1) erzeugt, um eine Stabilisierungsbremsung als einen Bremseingriff zur Begrenzung einer Schlingerbewegung des Anhängers durchzuführen, und wobei die Bremssteuereinrichtung (11) dazu ausgebildet ist, einen Steuerwert (SK) auszugeben, der einen Soll-Wert für die Betätigungskraft festlegt und gemäß dem der mindestens eine Bremsaktuator (13) die Betätigungskraft (FB) erzeugt, und wobei die Bremssteuereinrichtung (11) ein von dem Beschleunigungssensor (13) ausgegebenes Erfassungssignal über die Schlingerbewegung verarbeitet und dazu ausgebildet ist, eine Stabilisierungsbremsung bei Erkennung einer unzulässigen Schlingerbewegung des Anhängers einzuleiten, **dadurch gekennzeichnet, dass** die Bremssteuereinrichtung (11) dazu ausgebildet ist, die Soll-Betätigungskraft (FB) während einer Stabilisierungsbremsung zu verändern, und dass
- die Bremssteuereinrichtung (11) dazu ausgebildet ist, die Soll-Betätigungskraft (FB) während einer Stabilisierungsbremsung bei einem intervall-basierten Schema zu erhöhen; UND/ODER dass
- die Bremssteuereinrichtung (11) eine Mehrzahl von Kraftverlaufskurven (K1, K2, K3) umfasst, die den Verlauf der Soll-Betätigungskraft (FB) über der Zeit (t) angeben, insbesondere mehrere Sätze von Kraftverlaufskurven (K1, K2, K3), wobei die Soll-Betätigungskraft (FB) für eine Stabilisierungsbremsung gemäß den Kraftverlaufskurven (K1, K2, K3) erzeugt und verändert wird.

2. Bremssteuereinrichtung nach Anspruch 1, wobei die Bremssteuereinrichtung (11) dazu ausgebildet ist, die Soll-Betätigungskraft (FB) bei Auslösung einer Stabilisierungsbremsung mit einem vorbestimmten Anfangskraftwert (F_1) zu erzeugen, wobei insbesondere
- der Anfangskraftwert (F_1) auf Basis einer vorbekannten Masse des Anhängers (1) festgelegt ist; UND/ODER wobei
- eine Erhöhung der Soll-Betätigungskraft (FB) in einem Steuerintervall (TS) bis zur Erreichung eines festgelegten, nächst höheren Kraft-Niveaus erfolgt, und wobei die Soll-Betätigungskraft (FB) ab Erreichen dieses Kraft-Niveaus bis zum Ende des Steuerintervalls (TS) konstant gehalten wird; UND/ODER wobei
- eine Kraftverlaufskurve (K1) vorgibt, dass die Soll-Betätigungskraft (FB) während einer Stabilisierungsbremsung ein- oder mehrfach um einen Kraftsteigerungswert (dF) erhöht wird.

3. Bremssteuereinrichtung nach einem der vorhergehenden Ansprüche, wobei die Bremssteuereinrichtung (11) dazu ausgebildet ist, die Soll-Betätigungskraft (FB) allenfalls bis zur Erreichung eines vorgegebenen Maximalwerts (F_M) zu erhöhen, der insbesondere in Abhängigkeit von einem zulässigen Gesamtgewicht des Anhängers (1) festgelegt ist.

4. Bremssteuereinrichtung nach einem der vorhergehenden Ansprüche, wobei während einer Stabilisierungsbremsung der zeitliche Verlauf der Anhängerbewegung erfasst wird, insbesondere der zeitliche Verlauf
- einer Querbeschleunigung (QA) des Anhängers (1), UND/ODER
- einer Gierrate des Anhängers (1).

5. Bremssteuereinrichtung nach einem der vorhergehenden Ansprüche 2 bis 4, wobei die Schlingerbewegung des Anhängers durch eine Mehrzahl von Pendelbewegungen gekennzeichnet ist, die bei einer Periodizität stattfinden, und wobei die Zeitdauer eines Steuerintervalls (TS) um einen Faktor oder einen Aufschlagwert größer bemessen ist als eine halbe Periodendauer (TP) einer Pendelschwingung, und wobei die Periodendauer (TP) einer Pendelschwingung
- mit einem vorbekannten Referenzwert geschätzt wird, UND/ODER
- auf Basis der erfassten Querbeschleunigung (AQ) und/oder der erfassten Gierrate bestimmt oder angepasst wird.

6. Bremssteuereinrichtung nach einem der vorhergehenden Ansprüche, wobei während einer Stabilisierungsbremsung die Veränderung der Soll-Betätigungskraft (FB) fortgesetzt wird, insbesondere die Veränderung der Soll-Betätigungskraft (FB) gemäß einer gewählten Kraftverlaufskurve (K1) fortgesetzt wird, bis
- Eine Wirkbedingung (B2), ODER
- Eine Übermaßbedingung (B3), ODER
- Eine Abschlussbedingung (B4) erfasst ist; UND/ODER wobei bei Eintritt einer Wirkbedingung (B2), einer Übermaßbedingung (B3) oder einer Abschlussbedingung (B3) die Soll-Betätigungskraft (FB) gemäß einer neu ausgewählten Kraftverlaufskurve (K2, K3) erzeugt und/oder verändert wird.

7. Bremssteuereinrichtung nach einem der vorhergehenden Ansprüche, wobei
- die Soll-Betätigungskraft (FB) bei Eintreten einer Wirkbedingung (B2) auf dem momentanen Kraftniveau gehalten wird; UND/ODER wobei
- die Soll-Betätigungskraft (FB) bei Eintreten einer Übermaßbedingung (B3) verringert wird; UND/ODER wobei
- die Soll-Betätigungskraft (FB) bei Eintreten einer Abschlussbedingung vermindert wird, insbesondere gemäß einer vorbestimmten Kraftreduktionskurve (K4).

8. Bremssteuereinrichtung nach einem der vorhergehenden Ansprüche 6 oder 7, wobei
- eine Wirkbedingung (B2) und/oder eine Übermaßbedingung (B3) und/oder eine Abschlussbedingung (B4) erfüllt ist, wenn der Verlauf der Schlingerbewegung während einer Stabilisierungsbremsung ein vorbestimmtes Änderungsmaß (M2, MD, MS) erreicht oder überschreitet; UND/ODER wobei
- eine Wirkbedingung (B2) erreicht ist, wenn festgestellt wird, dass die Schlingerbewegung um ein festgelegtes Schwächungsmaß (MS) abgenommen hat, insbesondere um eine festgelegte Amplitudenminderung; UND/ODER wobei
- eine Übermaßbedingung (B3) erreicht ist, wenn sich die Schwingungsform der erfassten Schlingerbewegung um ein vorbestimmtes Deformationsmaß (MD) ändert; UND/ODER wobei
- eine Abschlussbedingung (B4) erreicht ist, wenn die Schlingerbewegung auf ein vorbestimmtes Abklingmaß (M2) zurückgegangen ist.

9. Schlingerbremseinrichtung für einen Fahrzeuganhänger (1), wobei die Schlingerbremseinrichtung (10) mindestens einen Bremsaktuator (13) umfasst, der eine Betätigungskraft für mindestens eine Radbremse des Fahrzeuganhängers (1) erzeugt, und wobei die Schlingerbremseinrichtung (10) dazu ausgebildet ist, eine unzulässige Schlingerbewegung des Fahrzeuganhängers (1) zu erkennen und durch einen Bremseingriff zu begrenzen, **dadurch gekennzeichnet, dass** die Schlingerbremseinrichtung (10) eine Bremssteuereinrichtung (11) umfasst, die nach einem der vorhergehenden Ansprüche ausgebildet ist.

10. Bremskraft-Steuerungsverfahren für die Steuerung einer Anhänger-Schlingerbremseinrichtung (10), wobei das Bremskraft-Steuerungsverfahren die folgenden Schritte umfasst:
- Beziehen eines Erfassungssignals über die Schlingerbewegung des Anhängers (1), an dem die Anhänger-Schlingerbremseinrichtung (10) angeordnet ist, von einem Beschleunigungssensor (12) ;
- Bei Erkennung einer unzulässigen Schlingerbewegung des Anhängers auf Basis des Erfassungssignals: Ausgeben eines Steuerwerts (SK), der einen Soll-Wert für die Betätigungskraft festlegt, zur Steuerung mindestens eines Bremsaktuators (13) der Schlingerbremseinrichtung (10), damit der Bremsaktuator (13) eine Betätigungskraft (FB)für mindestens eine Radbremse (3) des Anhängers (1) erzeugt, um eine Stabilisierungsbremsung herbeizuführen, wobei die Stabilisierungsbremsung ein Bremseingriff zur Begrenzung der Schlingerbewegung ist;
**dadurch gekennzeichnet, dass** der Steuerwert (SK) und somit die die Soll-Betätigungskraft (FB) während der Stabilisierungsbremsung verändert wird, und dass
- die Soll-Betätigungskraft (FB) während einer Stabilisierungsbremsung bei einem intervall-basierten Schema erhöht wird; UND/ODER dass
- eine Mehrzahl von Kraftverlaufskurven (K1, K2, K3) vorgesehen sind, die den Verlauf der Soll-Betätigungskraft (FB) über der Zeit (t) angeben, insbesondere mehrere Sätze von Kraftverlaufskurven (K1, K2, K3), wobei die Soll-Betätigungskraft (FB) für eine Stabilisierungsbremsung gemäß den Kraftverlaufskurven (K1, K2, K3) erzeugt und verändert wird.

11. Bremskraft-Steuerungsverfahren nach dem vorhergehenden Anspruch 10, wobei das Bremskraft-Steuerungsverfahren Anweisungen enthält, um während einer Stabilisierungsbremsung den Verlauf der Schlingerbewegung zu überwachen.

12. Bremskraft-Steuerungsverfahren nach einem der vorhergehenden Ansprüche 10 bis 11, wobei die Soll-Betätigungskraft (FB) bei Auslösung einer Stabilisierungsbremsung mit einem vorbestimmten Anfangskraftwert (F_1) erzeugt wird, und wobei insbesondere
- der Anfangskraftwert (F_1) auf Basis einer vorbekannten Masse des Anhängers (1) festgelegt ist; UND/ODER wobei
- eine Erhöhung der Soll-Betätigungskraft (FB) in einem Steuerintervall (TS) bis zur Erreichung eines festgelegten, nächst höheren Kraft-Niveaus erfolgt, und wobei die Soll-Betätigungskraft (FB) ab Erreichen dieses Kraft-Niveaus bis zum Ende des Steuerintervalls (TS) konstant gehalten wird; UND/ODER wobei
- eine Kraftverlaufskurve (K1) vorgibt, dass die Soll-Betätigungskraft (FB) während einer Stabilisierungsbremsung ein- oder mehrfach um einen Kraftsteigerungswert (dF) erhöht wird.

13. Bremskraft-Steuerungsverfahren nach einem der vorhergehenden Ansprüche 10 bis 12, wobei während einer Stabilisierungsbremsung die Veränderung der Soll-Betätigungskraft (FB) fortgesetzt wird, insbesondere die Veränderung der Soll-Betätigungskraft (FB) gemäß einer gewählten Kraftverlaufskurve (K1) fortgesetzt wird, bis
- Eine Wirkbedingung (B2), ODER
- Eine Übermaßbedingung (B3), ODER
- Eine Abschlussbedingung (B4) erfasst ist;
UND/ODER wobei bei Eintritt einer Wirkbedingung (B2), einer Übermaßbedingung (B3) oder einer Abschlussbedingung (B3) die Soll-Betätigungskraft (FB) gemäß einer neu ausgewählten Kraftverlaufskurve (K2, K3) erzeugt und/oder verändert wird.

14. Bremskraft-Steuerungsverfahren nach dem vorhergehenden Anspruch 10 bis 13, wobei das Bremskraft-Steuerungsverfahren ein oder mehrere Änderungsmaße (M2, MD, MS) und zugehörige Anweisungen enthält, nach denen der Verlauf der erfassten Schlingerbewegung mit den Änderungsmaßen (M2, MD, MS) verglichen wird.

15. Softwareprodukt zur Bremskraft-Steuerung einer Anhänger-Schlingerbremseinrichtung (10), wobei das Softwareprodukt insbesondere auf einem physischen Datenträger gespeichert und/oder durch eine Datenübertragungs-Schnittstelle empfangen ist, und wobei das Softwareprodukt Anweisungen enthält, die bei Ausführung auf einer Datenverarbeitungseinrichtung ein Bremskraft-Steuerungsverfahren nach einem der vorhergehenden Ansprüche 10 bis 14 ausführen, wobei die Datenverarbeitungseinrichtung dazu ausgebildet ist, ein Erfassungssignal über die Schlingerbewegung eines Anhängers (1) zu beziehen und einen Steuerwert (SK) zur Steuerung mindestens eines Bremsaktuators (13) der Anhänger-Schlingerbremseinrichtung (10) auszugeben, und wobei die Datenverarbeitungseinrichtung insbesondere ein Bestandteil der Bremssteuereinrichtung (11) der Anhänger-Schlingerbremseinrichtung (10) ist.

## Claims

1. Brake control device (11) for a trailer anti-sway brake device (10), wherein the brake control device (11) can be connected or is connected to an acceleration sensor (12) and at least one controllable brake actuator (13), and wherein the acceleration sensor (12) detects a swaying movement of the trailer (1) and the brake actuator (13) generates an actuating force (FB) for at least one wheel brake (3) of a trailer (1) in order to carry out a stabilization braking operation as a braking intervention for limiting a swaying movement of the trailer, and wherein the brake control device (11) is designed to output a control value (SK) which defines a target value for the actuating force and according to which the at least one brake actuator (13) generates the actuating force (FB), and wherein the brake control device (11) processes a detection signal, output by the acceleration sensor (13), about the swaying movement and is designed to initiate a stabilization braking operation when an impermissible swaying movement of the trailer is identified, **characterized in that** the brake control device (11) is designed to change the target actuating force (FB) during a stabilization braking operation, and **in that**
- the brake control device (11) is designed to increase the target actuating force (FB) during a stabilization braking operation with an interval-based scheme; AND/OR **in that**
- the brake control device (11) comprises a plurality of force characteristic curves (K1, K2, K3) which indicate the course of the target actuating force (FB) over time (t), in particular several sets of force characteristic curves (K1, K2, K3), wherein the target actuating force (FB) for a stabilization braking operation is generated and changed in accordance with the force characteristic curves (K1, K2, K3).

2. Brake control device according to Claim 1, wherein the brake control device (11) is designed to generate the target actuating force (FB) with a predetermined initial force value (F_1) when a stabilization braking operation is triggered, wherein in particular
- the initial force value (F_1) is defined on the basis of a previously known mass of the trailer (1); AND/OR wherein
- an increase in the target actuating force (FB) takes place in a control interval (TS) until a defined, next higher force level is reached, and wherein the target actuating force (FB) is kept constant starting from when this force level is reached until the end of the control interval (TS); AND/OR wherein
- a force characteristic curve (K1) specifies that the target actuating force (FB) is increased by a force increase value (dF) once or several times during a stabilization braking operation.

3. Brake control device according to either of the preceding claims, wherein the brake control device (11) is designed to increase the target actuating force (FB) at most until a specified maximum value (F_M) is reached, the maximum value being defined in particular depending on a permissible total weight of the trailer (1).

4. Brake control device according to one of the preceding claims, wherein the time course of the trailer movement, in particular the time course
- of a lateral acceleration (QA) of the trailer (1), AND/OR
- a yaw rate of the trailer (1),
is detected during a stabilization braking operation.

5. Brake control device according to one of the preceding Claims 2 to 4, wherein the swaying movement of the trailer is **characterized by** a plurality of pendulum movements which take place with a periodicity, and wherein the duration of a control interval (TS) is greater than half a period duration (TP) of a pendulum oscillation by a factor or a supplement value, and wherein the period duration (TP) of a pendulum oscillation
- is estimated using a previously known reference value, AND/OR
- is determined or adjusted on the basis of the detected lateral acceleration (AQ) and/or the detected yaw rate.

6. Brake control device according to one of the preceding claims, wherein the change in the target actuating force (FB) is continued, in particular the change in the target actuating force (FB) is continued in accordance with a selected force characteristic curve (K1), during a stabilization braking operation until
- an active condition (B2), OR
- an excess condition (B3), OR
- a termination condition (B4) is detected;
AND/OR wherein, when an active condition (B2), an excess condition (B3) or a termination condition (B3) occurs, the target actuating force (FB) is generated and/or changed in accordance with a newly selected force characteristic curve (K2, K3).

7. Brake control device according to one of the preceding claims, wherein
- the target actuating force (FB) is kept at the current force level when an active condition (B2) occurs; AND/OR wherein
- the target actuating force (FB) is reduced when an excess condition (B3) occurs; AND/OR wherein
- the target actuating force (FB) is reduced when a termination condition occurs, in particular in accordance with a predetermined force reduction curve (K4).

8. Brake control device according to either of the preceding Claims 6 and 7, wherein
- an active condition (B2) and/or an excess condition (B3) and/or a termination condition (B4) is satisfied when the course of the swaying movement reaches or exceeds a predetermined degree of change (M2, MD, MS) during a stabilization braking operation; AND/OR wherein
- an active condition (B2) is reached when it is established that the swaying movement has reduced by a defined degree of weakening (MS), in particular by a defined reduction in amplitude; AND/OR wherein
- an excess condition (B3) is reached when the oscillation shape of the detected swaying movement changes by a predetermined degree of deformation (MD); AND/OR wherein
- a termination condition (B4) is reached when the swaying movement has returned to a predetermined degree of decay (M2).

9. Anti-sway brake device for a vehicle trailer (1), wherein the anti-sway brake device (10) comprises at least one brake actuator (13) which generates an actuating force for at least one wheel brake of the vehicle trailer (1), and wherein the anti-sway brake device (10) is designed to identify an impermissible swaying movement of the vehicle trailer (1) and to limit said swaying movement by a braking intervention, **characterized in that** the anti-sway brake device (10) comprises a brake control device (11) which is designed according to one of the preceding claims.

10. Braking force control method for controlling a trailer anti-sway brake device (10), wherein the braking force control method comprises the following steps:
- acquiring a detection signal about the swaying movement of the trailer (1), on which the trailer anti-sway brake device (10) is arranged, from an acceleration sensor (12);
- when an impermissible swaying movement of the trailer is identified on the basis of the detection signal: outputting a control value (SK), which defines a target value for the actuating force, for controlling at least one brake actuator (13) of the anti-sway brake device (10), so that the brake actuator (13) generates an actuating force (FB) for at least one wheel brake (3) of the trailer (1) in order to cause a stabilization braking operation, wherein the stabilization braking operation is a braking intervention for limiting the swaying movement;
**characterized in that** the control value (SK) and therefore the target actuating force (FB) is changed during the stabilization braking operation, and **in that**
- the target actuating force (FB) is increased during a stabilization braking operation with an interval-based scheme; AND/OR **in that**
- a plurality of force characteristic curves (K1, K2, K3) are provided, which indicate the course of the target actuating force (FD) over time (t), in particular several sets of force characteristic curves (K1, K2, K3), wherein the target actuating force (FB) for a stabilization braking operation is generated and changed in accordance with the force characteristic curves (K1, K2, K3).

11. Braking force control method according to preceding Claim 10, wherein the braking force control method contains instructions in order to monitor the course of the swaying movement during a stabilization braking operation.

12. Braking force control method according to either of the preceding Claims 10 and 11, wherein the target actuating force (FB) is generated with a predetermined initial force value (F_1) when a stabilization braking operation is triggered, and wherein in particular
- the initial force value (F_1) is defined on the basis of a previously known mass of the trailer (1); AND/OR wherein
- an increase in the target actuating force (FB) takes place in a control interval (TS) until a defined, next higher force level is reached, and wherein the target actuating force (FB) is kept constant starting from when this force level is reached until the end of the control interval (TS); AND/OR wherein
- a force characteristic curve (K1) specifies that the target actuating force (FB) is increased once or several times by a force increase value (dF) during a stabilization braking operation.

13. Braking force control method according to one of the preceding Claims 10 to 12, wherein the change in the target actuating force (FB) is continued, in particular the change in the target actuating force (FB) is continued in accordance with a selected force characteristic curve (K1), during a stabilization braking operation until
- an active condition (B2), OR
- an excess condition (B3), OR
- a termination condition (B4) is detected;
AND/OR wherein the target actuating force (FB) is generated and/or changed in accordance with a newly selected force characteristic curve (K2, K3) when an active condition (B2), an excess condition (B3) or a termination condition (B3) occurs.

14. Braking force control method according to preceding Claims 10 to 13, wherein the braking force control method contains one or more degrees of change (M2, MD, MS) and associated instructions in accordance with which the course of the detected swaying movement is compared with the degrees of change (M2, MD, MS).

15. Software product for braking force control of a trailer anti-sway brake device (10), wherein the software product, in particular, is stored on a physical data carrier and/or is received by a data transmission interface, and wherein the software product contains instructions which execute a braking force control method according to one of the preceding Claims 10 to 14 when executed on a data processing device, wherein the data processing device is designed to acquire a detection signal about the swaying movement of a trailer (1) and to output a control value (SK) for controlling at least one brake actuator (13) of the trailer anti-sway brake device (10), and wherein the data processing device is, in particular, a constituent part of the brake control device (11) of the trailer anti-sway brake device (10).

## Revendications

1. Dispositif de commande de frein (11) pour un dispositif de frein anti-roulis de remorque (10), le dispositif de commande de frein (11) pouvant être connecté ou étant connecté à un capteur d'accélération (12) et au moins un actionneur de frein (13) commandable, et le capteur d'accélération (12) détectant un mouvement de roulis d'une remorque (1) et l'actionneur de frein (13) générant une force d'actionnement (FB) pour au moins un frein de roue (3) d'une remorque (1) afin d'effectuer un freinage de stabilisation en tant qu'une intervention de freinage en vue de limiter un mouvement de roulis de la remorque, et le dispositif de commande de frein (11) étant configuré pour délivrer en sortie une valeur de commande (SK) qui fixe une valeur de consigne pour la force d'actionnement et conformément à laquelle l'au moins un actionneur de frein (13) génère la force d'actionnement (FB), et le dispositif de commande de frein (11) traitant un signal de détection délivré en sortie par le capteur d'accélération (13) à propos du mouvement de roulis et étant configuré pour initier un freinage de stabilisation en cas de reconnaissance d'un mouvement de roulis inadmissible de la remorque, **caractérisé en ce que** le dispositif de commande de frein (11) est configuré pour modifier la force d'actionnement (FB) de consigne pendant un freinage de stabilisation, et **en ce que**
- le dispositif de commande de frein (11) est configuré pour augmenter la force d'actionnement (FB) de consigne pendant un freinage de stabilisation avec un schéma basé sur des intervalles ; ET/OU **en ce que**
- le dispositif de commande de frein (11) comporte une pluralité de courbes de tracé de force (K1, K2, K3) qui indiquent le tracé de la force d'actionnement (FB) de consigne en fonction du temps (t), notamment plusieurs jeux de courbes de tracé de force (K1, K2, K3), la force d'actionnement (FB) de consigne pour un freinage de stabilisation étant générée et modifiée conformément aux courbes de tracé de force (K1, K2, K3).

2. Dispositif de commande de frein selon la revendication 1, le dispositif de commande de frein (11) étant configuré pour générer la force d'actionnement (FB) de consigne lors du déclenchement d'un freinage de stabilisation avec une valeur de force initiale (F_1) prédéterminée,
- la valeur de force initiale (F_1) étant notamment fixée sur la base d'une masse préalablement connue de la remorque (1) ; ET/OU
- une augmentation de la force d'actionnement (FB) de consigne s'effectuant dans un intervalle de commande (TS) jusqu'à atteindre un niveau de force plus élevé suivant fixé, et la force d'actionnement (FB) de consigne étant maintenue constante à partir du moment où ce niveau de force est atteint jusqu'à la fin de l'intervalle de commande (TS) ; ET/OU
- une courbe de tracé de force (K1) prédéfinissant que la force d'actionnement (FB) de consigne est augmentée une ou plusieurs fois d'une valeur d'accroissement de force (dF) pendant un freinage de stabilisation.

3. Dispositif de commande de frein selon l'une des revendications précédentes, le dispositif de commande de frein (11) étant configuré pour augmenter la force d'actionnement (FB) de consigne dans tous les cas jusqu'à atteindre une valeur maximale (F_M) prédéfinie, laquelle est notamment fixée en fonction d'un poids total autorisé de la remorque (1).

4. Dispositif de commande de frein selon l'une des revendications précédentes, le tracé dans le temps du mouvement de la remorque étant acquis pendant un freinage de stabilisation, notamment le tracé dans le temps
- d'une accélération transversale (QA) de la remorque (1), ET/OU
- un taux de lacet de la remorque (1).

5. Dispositif de commande de frein selon l'une des revendications 2 à 4, le mouvement de roulis de la remorque étant **caractérisé par** une pluralité de mouvements pendulaires qui ont lieu selon une périodicité donnée, et la durée de l'intervalle de commande (TS) étant dimensionnée plus grande d'un facteur donné ou d'une valeur de majoration donnée qu'une demie durée de période (TP) d'une oscillation pendulaire, et la durée de période (TP) d'une oscillation pendulaire
- étant estimée avec une valeur de référence préalablement connue, ET/OU
- étant déterminée ou adaptée sur la base de l'accélération transversale (QA) acquise et/ou du taux de lacet acquis.

6. Dispositif de commande de frein selon l'une des revendications précédentes, la modification de la force d'actionnement (FB) de consigne, notamment la modification de la force d'actionnement (FB) de consigne conformément à une courbe de tracé de force (K1) sélectionnée, étant poursuivie pendant un freinage de stabilisation, jusqu'à ce que
- une condition d'effet (B2), OU
- une condition de surdimensionnement (B3), OU
- une condition de terminaison (B4) soit détectée ;
ET/OU lors de la survenance d'une condition d'effet (B2), d'une condition de surdimensionnement (B3) ou d'une condition de terminaison (B3), la force d'actionnement (FB) de consigne étant générée et/ou modifiée conformément à une courbe de tracé de force (K2, K3) nouvellement sélectionnée.

7. Dispositif de commande de frein selon l'une des revendications précédentes,
- la force d'actionnement (FB) de consigne, en cas de survenance d'une condition d'effet (B2), étant maintenue au niveau de force momentané ; ET/OU
- la force d'actionnement (FB) de consigne, en cas de survenance d'une condition de surdimensionnement (B3), étant réduite ; ET/OU
- la force d'actionnement (FB) de consigne, en cas de survenance d'une condition de terminaison, étant diminuée, notamment conformément à une courbe de réduction de force (K4) .

8. Dispositif de commande de frein selon l'une des revendications précédentes 6 ou 7,
- une condition d'effet (B2) et/ou une condition de surdimensionnement (B3) et/ou une condition de terminaison (B4) étant satisfaite lorsque le tracé du mouvement de roulis atteint ou dépasse un niveau de modification (M2, MD, MS) prédéterminé pendant un freinage de stabilisation ; ET/OU
- une condition d'effet (B2) étant atteinte lorsqu'il est constaté que le mouvement de roulis a diminué d'un niveau d'affaiblissement (MS) fixé, notamment d'une réduction d'amplitude fixée ; ET/OU
- une condition de surdimensionnement (B3) étant atteinte lorsque la forme de l'oscillation du mouvement de roulis détecté varie d'un niveau de déformation (MD) prédéterminé ; ET/OU
- une condition de terminaison (B4) étant atteinte lorsque le mouvement de roulis a baissé à un niveau d'évanouissement (M2) prédéterminé.

9. Dispositif de frein anti-roulis pour une remorque de véhicule (1), le dispositif de frein anti-roulis (10) comportant au moins un actionneur de frein (13), qui génère une force d'actionnement pour au moins un frein de roue de la remorque de véhicule (1), et le dispositif de frein anti-roulis (10) étant configuré pour reconnaître un mouvement de roulis inadmissible de la remorque de véhicule (1) et le limiter par une intervention de freinage, **caractérisé en ce que** le dispositif de frein anti-roulis (10) comprend un dispositif de commande de frein (11) qui est configuré selon l'une des revendications précédentes.

10. Procédé de commande de force de freinage pour la commande d'un dispositif de frein anti-roulis (10) de remorque, le procédé de commande de force de freinage comprenant les étapes suivantes :
- obtention, de la part d'un capteur d'accélération (12), d'un signal de détection à propos du mouvement de roulis de la remorque (1) au niveau de laquelle est disposé le dispositif de frein anti-roulis (10) de remorque ;
- en cas de reconnaissance d'un mouvement de roulis inadmissible de la remorque sur la base du signal de détection : délivrance en sortie d'une valeur de commande (SK) qui fixe une valeur de consigne pour la force d'actionnement, en vue de commande au moins un actionneur de frein (13) du dispositif de frein anti-roulis (10), afin que l'actionneur de frein (13) génère une force d'actionnement (FB) pour au moins un frein de roue (3) de la remorque (1) en vue de provoquer un freinage de stabilisation, le freinage de stabilisation étant une intervention de freinage en vue de limiter un mouvement de roulis ;
**caractérisé en ce que** la valeur de commande (SK) et ainsi la force d'actionnement (FB) de consigne est modifiée pendant le freinage de stabilisation, et **en ce que**
- la force d'actionnement (FB) de consigne est augmentée pendant un freinage de stabilisation avec un schéma basé sur des intervalles ; ET/OU **en ce que**
- une pluralité de courbes de tracé de force (K1, K2, K3) sont prévues, lesquelles indiquent le tracé de la force d'actionnement (FB) de consigne en fonction du temps (t), notamment plusieurs jeux de courbes de tracé de force (K1, K2, K3), la force d'actionnement (FB) de consigne pour un freinage de stabilisation étant générée et modifiée conformément aux courbes de tracé de force (K1, K2, K3).

11. Procédé de commande de force de freinage selon la revendication précédente 10, le procédé de commande de force de freinage contenant des instructions en vue de surveiller le tracé du mouvement de roulis pendant un freinage de stabilisation.

12. Procédé de commande de force de freinage selon l'une des revendications précédentes 10 à 11, la force d'actionnement (FB) de consigne étant générée lors du déclenchement d'un freinage de stabilisation avec une valeur de force initiale (F_1) prédéterminée, et
- la valeur de force initiale (F_1) étant notamment fixée sur la base d'une masse préalablement connue de la remorque (1) ; ET/OU
- une augmentation de la force d'actionnement (FB) de consigne s'effectuant dans un intervalle de commande (TS) jusqu'à atteindre un niveau de force plus élevé suivant fixé, et la force d'actionnement (FB) de consigne étant maintenue constante à partir du moment où ce niveau de force est atteint jusqu'à la fin de l'intervalle de commande (TS) ; ET/OU
- une courbe de tracé de force (K1) prédéfinissant que la force d'actionnement (FB) de consigne est augmentée une ou plusieurs fois d'une valeur d'accroissement de force (dF) pendant un freinage de stabilisation.

13. Procédé de commande de force de freinage selon l'une des revendications précédentes 10 à 12, la modification de la force d'actionnement (FB) de consigne, notamment la modification de la force d'actionnement (FB) de consigne conformément à une courbe de tracé de force (K1) sélectionnée, étant poursuivie pendant un freinage de stabilisation, jusqu'à ce que
- une condition d'effet (B2), OU
- une condition de surdimensionnement (B3), OU
- une condition de terminaison (B4) soit détectée ;
ET/OU lors de la survenance d'une condition d'effet (B2), d'une condition de surdimensionnement (B3) ou d'une condition de terminaison (B3), la force d'actionnement (FB) de consigne étant générée et/ou modifiée conformément à une courbe de tracé de force (K2, K3) nouvellement sélectionnée.

14. Procédé de commande de force de freinage selon l'une des revendications précédentes 10 à 13, le procédé de commande de force de freinage contenant un ou plusieurs niveaux de modification (M2, MD, MS) et des instructions associées, d'après lesquelles le tracé du mouvement de roulis détecté est comparé aux niveaux de modification (M2, MD, MS).

15. Produit logiciel pour la commande de la force de freinage d'un dispositif de frein anti-roulis de remorque (10), le produit logiciel étant notamment enregistré sur un support de données physique et/ou reçu par une interface de transmission de données, et le produit logiciel contenant des instructions qui, lorsqu'elles sont exécutées sur un dispositif de traitement de données, mettent en œuvre un procédé de commande de force de freinage selon l'une des revendications précédentes 10 à 14, le dispositif de traitement de données étant configuré pour obtenir un signal de détection à propos du mouvement de roulis d'une remorque (1) et délivrer en sortie une valeur de commande (SK) destinée à commander au moins un actionneur de frein (13) du dispositif de frein anti-roulis de remorque (10), et le dispositif de traitement de données étant notamment un élément constitutif (11) du dispositif de frein anti-roulis de remorque (10).
